(19) Europäisches Patentamt | European Patent Office | Office européen des brevets

(11) **EP 4 086 724 B1**

(12) **EUROPEAN PATENT SPECIFICATION**

(45) Date of publication and mention of the grant of the patent:
**18.10.2023 Bulletin 2023/42**

(21) Application number: **21203882.2**

(22) Date of filing: **21.10.2021**

(51) International Patent Classification (IPC):
**G05D 23/19** *(2006.01)*      **F24D 19/10** *(2006.01)*

(52) Cooperative Patent Classification (CPC):
**G05D 23/1934; F24D 19/1015**

(54) **CONTROL OF COOLING AND/OR OF HEATING**

STEUERUNG EINER KÜHLUNG UND/ODER HEIZUNG

RÉGLAGE DU REFROIDISSEMENT ET/OU DU CHAUFFAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.05.2021 EP 21171787**

(43) Date of publication of application:
**09.11.2022 Bulletin 2022/45**

(73) Proprietor: **Siemens Schweiz AG 8047 Zürich (CH)**

(72) Inventors:
• **Baumgärtner, Thomas 91056 Erlangen (DE)**

• **Gwerder, Markus 6312 Steinhausen (CH)**
• **Langemeyer, Stefan 90489 Nürnberg (DE)**
• **Schütz, Thomas 90765 Fürth (DE)**

(74) Representative: **Siemens Patent Attorneys Postfach 22 16 34 80506 München (DE)**

(56) References cited:
**EP-A2- 1 564 616      WO-A1-2019/129800 US-A1- 2021 034 024**

EP 4 086 724 B1

**Description**

Background

The present disclosure relates to control and/or regulation of at least one room comfort parameter of a site. More specifically, the present disclosure teaches control and/or regulation of a room comfort parameter within a building.

Energy management systems and/or power management systems for buildings can orchestrate supply and demand of power for buildings. More specifically, such systems optimise use of power and minimise carbon dioxide emissions by decoupling supply and demand of power. Also, orchestration of supply and demand by an energy management system or by a power management system can align with the management of a power grid. The system then contributes to improved stability of large-scale power grids. The decoupling of supply and demand of power is crucial for demand response.

To orchestrate supply and demand of power, energy management systems and/or power management systems control loads within a building as well as any supplies of power. An energy and/or power management system can, for example, control the charging of electric vehicles such that vehicles are charged when the cost of electricity is low. An electric vehicle is ideally charged at times when the power grid exhibits high levels of stability.

Energy management systems and/or power management systems can also control thermal loads of a site. More specifically, energy management systems and/or power management systems can control cooling and/or heating within a building. The building can, by way of non-limiting example, be a commercial and/or an industrial and/or a residential building.

Buildings can employ hot-water tanks to store thermal energy such as heat. Likewise, coldwater storage tanks can be employed as buffers for coolants such as water. Also, storage ovens can store thermal energy to be released during the day.

Unlike storage tanks, thermally activated building structures harness thermal masses of concrete building structures to buffer thermal energy. To that end, thermally activated building structures employ heating ducts or cooling ducts inside concrete walls or inside concrete floor or inside concrete ceilings to cool and/or to heat such structures. The concrete structures of the building then transfer thermal energy into spaces of the building via convection and/or via radiation.

A patent application EP2993640A1 was filed by SIEMENS AG on 24 July 2015. EP2993640A1 claims a priority of an earlier application filed on 8 September 2014. The application was published on 9 March 2016. EP2993640A1 deals with a power management system.

EP2993640A1 deals with a building management system having a base load and at least one variable load. It is envisaged that at least one variable load of the building comprises a charging point for an electric vehicle. The building management system of EP2993640A1 uses an algorithm to schedule the various loads of a building. An algorithm is employed to arrive at an optimum schedule. The algorithm accommodates various constraints such as a technical constraint of the charging point. The algorithm can, by way of non-limiting example, solve a mixed-integer linear problem. The building management system then controls supply of power to the at least one variable load in accordance the optimum schedule.

A patent application EP3748458A1 was filed by SIEMENS SCHWEIZ AG on 3 June 2019. The application was published on 9 December 2020. EP3748458A1 does not claim a priority date of an earlier application. EP3748458A1 deals with a thermal storage device controller.

The application EP3748458A1 deals with local sources of renewable power. Local sources of renewable power can, by way of non-limiting example, comprise photovoltaic installations. Rather than feeding power from such sources to a power grid, power from local renewable sources is employed to heat a medium inside a local thermal storage tank. A sensor is employed to determine whether the local thermal storage tank can absorb heat. Power from the renewable source is directed to the thermal storage tank in response to a positive determination. In doing so, the system avoids faulted thermal storage tanks due to overheating. According to EP3748458A1, a cooling element inside a thermal storage device can also be activated. Once again, a sensor is employed to check if the thermal storage tank can absorb the thermal energy.

A patent application US2021/034024A1 was filed by Johnson Controls Technology on 19 October 2020. The application US2021/034024A1 was published on 4 February 2021. US2021/034024A1 deals with a building HVAC system with multi-level model predictive control.

A European patent application EP1564616A3 was filed by NEDAP NV (NL) on 24 January 2005. The application EP1564616A3 was published on 17 August 2005. EP1564616A3 deals with system for independently regulating temperatures in different spaces and temperatures of one or more hot-water supplies.

A patent application WO2019/129800A1 was filed by VITO NV (BE) on 19 October 2020. The application WO2019/129800A1 was published on 4 July 2019. WO2019/129800A1 deals with smart thermostatic radiator or convector valve for a heating system and control method.

The instant disclosure introduces control and/or regulation by an energy and/or power management system in a building having thermally activated building structures. The system of the instant disclosure schedules activation and/or deactivation of thermally activated building structures in accordance with occupants' needs. The system also schedules activation and/or deactivation of thermally activated building structures in accordance with technical constraints of the building and/or of the site. In so doing, the system of the instant disclosure also minimises carbon dioxide footprint and/or contributes to the stability of the power grid.

Summary

The present disclosure teaches control and/or regulation of at least one room comfort parameter of a site having at least one thermal heat exchanger having a predetermined thermal discharge characteristic. A thermal heat exchanger having predetermined thermal discharge characteristic can, by way of example, be a thermally activated building structure. The predetermined thermal discharge characteristic can, by way of non-limiting example, be a curve indicative of thermal discharge versus time. The predetermined discharge characteristic can, by way of non-limiting example, also be a mathematical relationship indicative of thermal discharge versus time. The predetermined discharge characteristic can, by way of another non-limiting example, be a formula indicative of thermal discharge versus time. Thermal discharge is advantageously expressed in units of power or in a percentage of a maximum amount of power. Once a thermally activated building structure is heated to a certain level, the structure will discharge thermal energy in a predetermined fashion. The rate of discharge of thermal energy by the thermally activated heating structure is generally not accelerated nor influenced by an air-conveyor such as a fan.

Control of sites having such thermal heat exchangers with predetermined rates of discharge involves challenges, since comfort parameters of a site must be kept within acceptable limits. Also, the power intake shall generally comply with requirements of a grid operator. That is, excessive intake of power at times when the grid is at or near peak load must be avoided.

The instant disclosure suggests a two-fold approach to tackle those challenges. A temperature controller ensures that each space or each cluster of spaces of the site stay within acceptable limits of a comfort parameter such as temperature. To that end, the temperature controller can independently raise or lower values of the comfort parameter. In so doing, the temperature controller can cause cooling and/or heating.

A superordinate controller such as a system controller orchestrates the power management of the site. To that end, the superordinate controller determines a thermal power balance for every space or for every cluster of spaces of the site. The thermal power balance involves power available for cooling and/or for heating at a given point in time. The thermal power balance also involves demands for power such as demands for heating power or demands for cooling power. Those demands also refer to a given point in time.

Based on the thermal power balance, the superordinate controller distributes available power of a thermal source of the site amongst the spaces or clusters. The superordinate controller accordingly determines set points for the comfort parameters of the various spaces or clusters of spaces. The set points are then forwarded the temperature controllers of the various spaces or clusters of spaces.

An attempt to compute the thermal power balances of a site having a multitude of spaces can easily require excessive computing power. That is why several spaces of a site and/or several rooms of a building are advantageously clustered. The clustering of spaces and/or room is preferably carried out based on at least one of:

- sizes of the spaces and/or sizes of the rooms,
- building volumes of the spaces and/or building volumes of the rooms,
- thermal capacitances of the spaces and/or thermal capacitances of the rooms,
- comfort requirements such as temperature,
- usage such as conference rooms, kitchen areas, etc.

The clustering of the spaces of a site and/or of the rooms of a building reduces dimensions of the underlying system of equations. Consequently, the amount of computing power involved in solving the system of equations is lowered.

It is also envisaged that an application-specific integrated circuit is employed to solve the system of equations making up the thermal power balance. It is still envisaged that a field programmable-gate array is employed to solve the system of equations making up the thermal power balance. In a special embodiment, a combination of one or more application-specific integrated circuits and of one or more field-programmable gate arrays solves the system of equations.

Brief description of the drawings

Various features will become apparent to those skilled in the art from the following detailed description of the disclosed non-limiting embodiments. The drawings that accompany the detailed description can be briefly described as follows:

FIG 1 schematically depicts a site having thermally activated building structures and a heat source.

FIG 2 schematically depicts a site having thermally activated building structures and a source of cooling.

FIG 3 schematically illustrates a cloud controller in operative communication with a local control of a site.

FIG 4 schematically depicts a site having a thermal buffer in fluid communication with a thermally activated building structure.

FIG 5 shows a neural network for control of a thermally activated building structure.

Detailed description

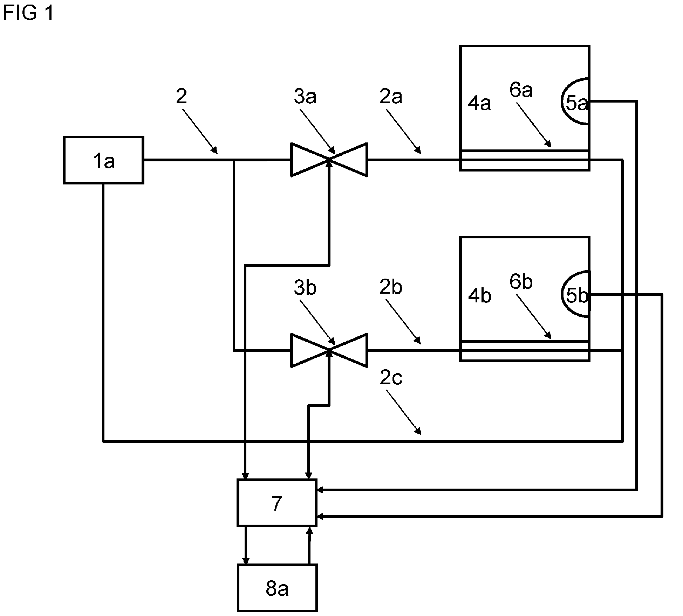

FIG 1 shows a site having a heat source 1a. It is envisaged that the site comprises a building. It is envisaged that the building is a commercial and/or industrial and/or residential building.
The heat source 1a advantageously comprises at least one of

- a heat pump such as a mechanical heat pump,
- a gas-fired burner,
- an oil-fired burner,
- a solar thermal collector.

In an embodiment, the heat source 1a comprises a heat pump and at least one of

- a gas fired burner,
- an oil-fired burner.

According to an aspect of the instant disclosure, the heat source 1a operates the heat hump so long as the coefficient of performance of the heat pump is within acceptable limits. If the coefficient of performance of the heat pump is no longer within acceptable limits, the heat source 1a switches over to an alternate source selected from at least one of

- the gas fired burner,
- the oil-fired burner.

In a special embodiment, the heat source 1a is part of a heating system such as a heating system providing combined heat and power.
The heat source 1a connects to a duct network 2. The heat source 1a advantageously is in fluid communication with the duct network 2. A heating medium such as water circulates in the duct network 2. In a special embodiment, the heating medium comprises water and at least one compound selected from

- ethylene glycol,
- propylene glycol,
- propylene glycol methyl ether,
- potassium formate,

The duct network 2 can have a plurality of branches such as two branches, five branches, or ten or more branches. FIG 1 depicts a duct network 2 having a first branch 2a and a second branch 2b. It is envisaged the duct network 2 comprises a circuit having a plurality of branches. In a special embodiment, the duct network 2 is a circuit having a plurality of branches. The first branch 2a as shown in FIG 1 is different from the second branch 2b also shown in FIG 1.
A valve 3a, 3b can be arranged in each branch 2a, 2b. It is envisaged that more than one valve can be arranged in a branch 2a, 2b. It is also envisaged that the first branch 2a comprises the first valve 3a. It is further envisaged that the second branch 2b comprises the second valve 3b. The first valve 3a as shown in FIG 1 is different from the second valve 3b also shown in FIG 1.
In an embodiment, at least one of the valves 3a, 3b is an electromechanical valve. At least one of the valves 3a, 3b advantageously comprises an actuator such as a stepper motor. According to an aspect of the present disclosure, at least one of the valves 3a, 3b is selected from

- a ball valve,
- a butterfly valve,
- a globe valve,
- a pressure independent control valve,
- an electronic pressure independent control valve.

In a special embodiment, all valves 3a, 3b are electromechanical valves. All valves 3a, 3b comprise actuators such as stepper motors. The type of valve is preferably the same for all the valves, the type being selected from

- a ball valve,
- a butterfly valve,
- a globe valve,
- a pressure independent control valve,
- an electronic pressure independent control valve.

In a special embodiment, the site comprises a single space 4a, 4b such as a single room.

It is envisaged that the site shown in FIG 1 comprises a plurality of spaces 4a, 4b such as two spaces, five spaces or more than ten spaces. It is also envisaged that the site comprises a plurality of rooms such as two rooms, five rooms or more than ten rooms. It is still envisaged that the building shown in FIG 1 comprises a plurality of spaces 4a, 4b such as two spaces, five spaces or more than ten spaces. The first space 4a as shown in FIG 1 is different from the second space 4b as also shown in FIG 1.

Each space 4a, 4b is preferably associated with a sensor 5a, 5b such as a temperature sensor. A sensor 5a, 5b such as a temperature sensor is advantageously arranged in each space 4a, 4b. Ideally, each space 4a, 4b comprises a sensor 5a, 5b such as a temperature sensor. The first sensor 5a as shown in FIG 1 is different from the second sensor 5b also shown in FIG 1.

It is envisaged that the building comprises a plurality of rooms such as two rooms, five rooms or more than ten rooms. Each room is preferably associated with a sensor 5a, 5b such as a temperature sensor. A sensor 5a, 5b such as a temperature sensor is advantageously arranged in each room. Ideally, each room comprises a sensor 5a, 5b such as a temperature sensor.

It is also envisaged that at least one space 4a, 4b is associated with a thermally activated building structure (TABS) 6a, 6b. In an embodiment, a thermally activated building structure 6a, 6b forms at least one of

- a floor,
- a ceiling,
- a wall

of the at least one space 4a, 4b. In a special embodiment, the at least one space 4a, 4b comprises a thermally activated building structure 6a, 6b. According to an aspect of the present disclosure, all spaces 4a, 4b of the site are associated with at least one thermally activated building structure 6a, 6b. According to another aspect of the present disclosure, all spaces 4a, 4b of the site comprise at least one thermally activated building structure 6a, 6b. The first thermally activated building structure 6a as shown in FIG 1 is different from the second thermally activated building structure 6b also shown in FIG 1.

It is still envisaged that at least one room is associated with a thermally activated building structure (TABS) 6a, 6b. In an embodiment, a thermally activated building structure 6a, 6b forms at least one of

- a floor,
- a ceiling,
- a wall

of the at least one room. In a special embodiment, the at least one room comprises a thermally activated building structure 6a, 6b. According to an aspect of the present disclosure, all rooms of the building are associated with at least one thermally activated building structure 6a, 6b. According to another aspect of the present disclosure, all rooms of the building comprise at least one thermally activated building structure 6a, 6b.

A thermally activated building structure 6a, 6b comprises a cooling member and/or a heating member. The cooling member and/or the heating member can, by way of non-limiting example, comprise a duct of a branch 2a, 2b.

EP 4 086 724 B1

In an embodiment, the cooling member and/or the heating member is a duct of a branch 2a, 2b. The heating member can, by way of another non-limiting example, also comprise a heating wire. In an embodiment, the heating member is a heating wire.

The cooling member and/or heating member is interposed between two layers of concrete. In an embodiment, the cooling member and/or heating member is sandwiched between two layers of concrete. The layers of concrete are advantageously each at least twenty millimeters thick, preferably at least fifty millimeters thick, or even at least one hundred millimeters thick. Thick concrete layers confer advantages in terms of large thermal masses for storage of thermal energy such as cold or heat. The capacity of the thermally activated building structure thus increases with the thickness of those concrete layers. In an embodiment, the two layers of concrete differ in thickness. In an alternate embodiment, the two layers of concrete have the same thickness or substantially the same thickness.

The first valve 3a as shown in FIG 1 controls flow of the medium to a first space 4a. The first space 4a can comprise a first room of a building. The first space 4a can also be a first room of a building.

A duct of the first branch 2a is associated with the first space 4a. Preferably, the first space 4a comprises the duct of the first branch 2a. The duct of the first branch 2a is arranged inside a first thermally activated building structure 6a. The first thermally activated building structure 6a as shown in FIG 1 is a floor of the first space 4a. Preferably, the first space 4a comprises the first thermally activated building structure 6a. In an embodiment, the first space 4a comprises a heating floor and the heating floor comprises the first thermally activated building structure 6a. The first thermally activated building structure 6a as shown in FIG 1 can also be a floor of a first room. Preferably, the first room comprises the first thermally activated building structure 6a. In an embodiment, the first room comprises a heating floor and the heating floor comprises the first thermally activated building structure 6a.

The first thermally activated building structure 6a is in fluid communication with the first branch 2a and is in fluid communication with a return duct 2r. More specifically, a duct of the first thermally activated building structure 6a is in fluid communication with the first branch 2a and with the return duct 2r. That is, the duct of the first thermally activated building structure 6a comprises a first opening and a second opening, the second opening being different from the first opening. The first opening is in fluid communication with the first branch 2a and with the first valve 3a. The second opening is in fluid communication with the return duct 2r. The return duct 2r connects the first thermally activated building structure 6a to the heat source 1a. More specifically, the return duct 2r connects the second opening of the duct of the thermally activated building structure 6a to the heat source 1a.

In an embodiment, the return duct 2r comprises a return branch. In a special embodiment, the return duct 2r is a return branch.

The duct network 2 advantageously comprises at least two of

- the first branch 2a,
- the second branch 2b,
- the return duct 2r.

The duct network 2 ideally comprises the first branch 2a and the second branch 2b and the return duct 2r.

A first sensor 5a such as a temperature sensor is arranged in the first space 4a. It is envisaged that the first sensor 5a is associated with the first space 4a. It is also envisaged that the first space 4a comprises the first sensor 5a. In a special embodiment, a sensor 5a such as a temperature sensor is arranged in the first room. It is envisaged that the first sensor 5a is associated with the first room. It is also envisaged that the first room comprises the first sensor 5a.

The second valve 3b as shown in FIG 1 controls flow of the heating medium to a second space 4b. The second space 4b can comprise a second room of a building. The second space 4b can also be a second room of a building.

A duct of the second branch 2b is associated with the second space 4b. Preferably, the second space 4b comprises the duct of the second branch 2b. The duct of the second branch 2b is arranged inside a second thermally activated building structure 6b. The second thermally activated building structure 6b as shown in FIG 1 is a floor of the second space 4b. Preferably, the second space 4b comprises the second thermally activated building structure 6b. In an embodiment, the second space 4b comprises a heating floor and the heating floor comprises the second thermally activated building structure 6b. The second thermally activated building structure 6b as shown in FIG 1 can also be a floor of a second room. Preferably, the second room comprises the second thermally activated building structure 6b. In an embodiment, the second room comprises a heating floor and the heating floor comprises the second thermally activated building structure 6b.

The second thermally activated building structure 6b is in fluid communication with the second branch 2b and is in fluid communication with the return duct 2r. More specifically, a duct of the second thermally activated building structure 6b is in fluid communication with the second branch 2b and with the return duct 2r. That is, the duct of the second thermally activated building structure 6b comprises a first opening and a second opening, the second opening being different from the first opening. The first opening is in fluid communication with the second branch 2b and with the second valve 3b. The second opening is in fluid communication with the return duct 2r. The return duct 2r connects the

6

second thermally activated building structure 6b to the heat source 1a. More specifically, the return duct 2r connects the second opening of the duct of the thermally activated building structure 6b to the heat source 1a.

FIG 1 shows the first and the second thermally activated building structures 6a, 6b connected to the same return duct 2r. In another embodiment not shown in FIG 1, separate return ducts connect the thermally activated building structures 6a, 6b and the heat source 1a.

A second sensor 5b such as a temperature sensor is arranged in the second space 4b. It is envisaged that the second sensor 5b is associated with the second space 4b. It is also envisaged that the second space 4b comprises the second sensor 5b. In a special embodiment, a sensor 5b such as a temperature sensor is arranged in the second room. It is envisaged that the second sensor 5b is associated with the second room. It is also envisaged that the second room comprises the second sensor 5b.

The site and/or the building as shown in FIG 1 also comprises a temperature controller 7. In an embodiment, the temperature controller 7 is a temperature controller for the site. In a related embodiment, the temperature controller 7 is a temperature controller for a building.

The temperature controller 7 advantageously comprises a microcontroller and/or a microprocessor. In an embodiment, the temperature controller 7 is a microcontroller and/or is a microprocessor. The temperature controller 7 preferably comprises a memory such as a non-volatile memory.

According to an aspect of the present disclosure, the temperature controller 7 comprises one or more proportional and integral controllers. It is envisaged that the temperature controller 7 comprises an individual proportional and integral controller for every space 4a, 4b of the site. That is, the temperature controller 7 is operable to control temperatures in a multitude of spaces 4a, 4b. Likewise, the temperature controller 7 can comprise an individual proportional and integral controller for every room of the building. In other words, the temperature controller 7 is operable to control temperatures in a multitude of rooms.

According to a related aspect of the present disclosure, the temperature controller 7 comprises one or more proportional and integral and derivative controllers. It is envisaged that the temperature controller 7 comprises an individual proportional and integral and derivative controller for every space 4a, 4b of the site. That is, the temperature controller 7 is operable to control temperatures in a multitude of spaces 4a, 4b. Likewise, the temperature controller 7 can comprise an individual proportional and integral and derivative controller for every room of the building. In other words, the temperature controller 7 is operable to control temperatures in a multitude of rooms.

According to another related aspect of the present disclosure, the temperature controller 7 comprises one or more finite impulse response filters. It is envisaged that the temperature controller 7 comprises an individual finite impulse response filter for every space 4a, 4b of the site. That is, the temperature controller 7 is operable to control temperatures in a multitude of spaces 4a, 4b. Likewise, the temperature controller 7 can comprise an individual finite impulse response filter for every room of the building. In other words, the temperature controller 7 is operable to control temperatures in a multitude of rooms.

The temperature controller 7 can also comprise one or more digital-to-analog converters. The one or more digital-to-analog converters convert digital signals to analog signals to be transmitted to the valves 3a, 3b. It is envisaged that the temperature controller 7 comprises an individual digital-to-analog converter for every space 4a, 4b of the site. Likewise, the temperature controller 7 can comprise an individual digital-to-analog converter for every room of the building. The one or more digital-to-analog converters can be integral parts of the temperature controller 7. That is, the one or more digital-to-analog converters and the temperature controller 7 are arranged on the same system-on-a-chip.

In another embodiment, the temperature controller 7 transmits digital signals to the valves 3a, 3b. That is, communication between the temperature controller 7 and the valves 3a, 3b involves a digital communication bus. Communication between the temperature controller 7 and the valves 3a, 3b advantageously involves a digital communication protocol.

The temperature controller 7 can also comprise one or more analog-to-digital converters. The one or more analog-to-digital converters convert analog signals received from the sensors 5a, 5b to digital representations thereof. It is envisaged that the temperature controller 7 comprises an individual analog-to-digital converter for every sensor 5a, 5b of the site. It is also envisaged that the temperature controller 7 comprises an individual analog-to-digital converter for every space 4a, 4b of the site. Likewise, the temperature controller 7 can comprise an individual analog-to-digital converter for every room of the building. The one or more analog-to-digital converters can be integral parts of the temperature controller 7. That is, the one or more analog-to-digital converters and the temperature controller 7 are arranged on the same system-on-a-chip.

In another special embodiment, the temperature controller 7 comprises one or more sigma-delta converters. The one or more sigma-delta converters provide conversion of analog signals received from the sensors 5a, 5b to digital representations thereof. It is envisaged that the temperature controller 7 comprises an individual sigma-delta converter for every sensor 5a, 5b of the site. It is also envisaged that the temperature controller 7 comprises an individual sigma-delta converter for every space 4a, 4b of the site. Likewise, the temperature controller 7 can comprise an individual sigma-delta converter for every room of the building. The one or more sigma-delta converters can be integral parts of the temperature controller 7. That is, the one or more sigma-delta converters and the temperature controller 7 are arranged on the same system-on-a-chip.

In another embodiment, the temperature controller 7 receives digital signals from the sensors 5a, 5b. That is, communication between the temperature controller 7 and the sensors 5a, 5b involves a digital communication bus. Communication between the temperature controller 7 and the sensors 5a, 5b advantageously involves a digital communication protocol.

Digital communication between the temperature controller 7 and the sensors 5a, 5b can also involve wireless communications. To that end, the temperature controller 7 can comprise an interface for wireless communication and/or a controller for wireless communication. The interface for wireless communication and/or the controller for wireless communication can, by way of non-limiting example, rely on wireless solutions such as WLAN, KNX@ RF, Thread, Zigbee, and/or EnOcean®.

Communication between the temperature controller 7 and the sensors 5a, 5b can, by way of another non-limiting example, rely on hard-wired connections such as Ethernet® cables or on KNX@ cables. Likewise, communication between the temperature controller 7 and the sensors 5a, 5b can, by way of another non-limiting example, rely on hard-wired connections such as Ethernet® cables or on KNX@ cables.

To afford control of temperature in the first space 4a, the temperature controller 7 connects to the first valve 3a and to the first sensor 5a.

The connection between the temperature controller 7 and the first valve 3a can be bidirectional. A bidirectional connection affords flexibility. More specifically, the first valve 3a may not only receive signals from the temperature controller 7, but may also send signals such as position signals back to the temperature controller 7. The connection between the temperature controller 7 and the first valve 3a can also be unidirectional. Communication from the temperature controller 7 to the first valve 3a is facilitated by such a unidirectional connection. A unidirectional connection reduces complexity.

The connection between the temperature controller 7 and the first sensor 5a can be bidirectional. A bidirectional connection affords flexibility. More specifically, the sensor 5a may not only send signals to the temperature controller 7, but also receive signals such as wake-up signals transmitted by the temperature controller 7. The connection between the temperature controller 7 and the first sensor 5a can also be unidirectional. Communication from the first sensor 5a to the temperature controller 7 is facilitated by such a unidirectional connection. A unidirectional connection reduces complexity.

To afford control of temperature in the second space 4b, the temperature controller 7 connects to the second valve 3b and to the second sensor 5b.

The connection between the temperature controller 7 and the second valve 3b can be bidirectional. A bidirectional connection affords flexibility. More specifically, the second valve 3b may not only receive signals from the temperature controller 7 but may also send signals such as position signals back to the temperature controller 7. The connection between the temperature controller 7 and the second valve 3b can also be unidirectional. Communication from the temperature controller 7 to the second valve 3b is facilitated by such a unidirectional connection. A unidirectional connection reduces complexity.

The connection between the temperature controller 7 and the second sensor 5b can be bidirectional. A bidirectional connection affords flexibility. More specifically, the sensor 5b may not only send signals to the temperature controller 7 but may also receive signals such as wake-up signals transmitted by the temperature controller 7. The connection between the temperature controller 7 and the second sensor 5b can also be unidirectional. Communication from the second sensor 5b to the temperature controller 7 is facilitated by such a unidirectional connection. A unidirectional connection reduces complexity.

The temperature controller 7 can implement a plethora of algorithms such as

- proportional and integral control,
- proportional and integral and derivative control,
- finite impulse response filtering

to control temperatures in the spaces 4a, 4b. To implement such control, the temperature controller 7 will need a set point. More specifically, the temperature controller 7 will need one or more set points indicative of temperature. The temperature controller 7 can also require a set of parameter values employed by a finite impulse response algorithm.

In an embodiment, the temperature controller 7 uses the same set point indicative of temperature for all the spaces 4a, 4b of the site. Likewise, the temperature controller 7 can use the same set point indicative of temperature for all rooms of a building. In an alternate embodiment, the temperature controller 7 uses individual set points indicative of temperature for each of the spaces 4a, 4b of the site. That is, the temperature controller 7 is operable to cool and/or to heat the spaces 4a, 4b individually. Likewise, the temperature controller 7 can use individual set points indicative of temperature for each room of a building. That is, the temperature controller 7 is operable to cool and/or to heat the rooms individually.

According to an aspect of the present disclosure, the temperature controller 7 uses the same set of parameter values for controlling temperatures in all the spaces 4a, 4b of the site. Likewise, the temperature controller 7 can use the same set of parameter values for controlling temperatures in all rooms of a building. According to another aspect of the present disclosure, the temperature controller 7 uses individual sets of parameter values for controlling temperatures in each of the spaces 4a, 4b of the site. That is, the temperature controller 7 is operable to cool and/or to heat the spaces 4a, 4b individually. Likewise, the temperature controller 7 may use individual sets of parameter values for controlling temperatures in each room of a building. That is, the temperature controller 7 is operable to cool and/or to heat the rooms individually.

FIG 1 shows a system controller 8a. The system controller 8a can, by way of non-limiting example, be a controller of an energy management system. The system controller 8a can, by way of another non-limiting example, be a controller of a power management system. The system controller 8a can, by way of yet another non-limiting example, be a controller of a building management system.

The system controller 8a advantageously comprises a microcontroller and/or is a microprocessor. In an embodiment, the system controller 8a is a microcontroller and/or is a microprocessor. The system controller 8a preferably comprises a memory such as a non-volatile memory.

Communication between the system controller and the temperature controller The system controller 8a is in operative communication with the temperature controller 7. The connection between the system controller 8a and the temperature controller 7 is advantageously bidirectional. A bidirectional connection affords flexibility.

More specifically, the system controller 8a is operable to send signals indicative of set points to the temperature controller 7. In an embodiment, the system controller 8a is operable to send a plurality of signals indicative of set points to the temperature controller 7. The plurality of signals comprises signals indicative of set points for individual spaces 4a, 4b of the site. The plurality of signals can also comprise signals indicative of set points for individual rooms of the building. The set points are advantageously set points indicative of temperature.

The temperature controller 7 is operable to produce one or more set points indicative of temperature from the signals received from the system controller 8a. Advantageously, the temperature controller 7 is operable to subject such set points to a plausibility test. If a set point indicates a temperature that is below a minimum temperature, that set point will be ignored by the temperature controller 7. If a set point indicates a temperature that is above a maximum temperature, that set point will also be ignored by the temperature controller 7. It is envisaged that the temperature controller 7 is operable to subject more than one set point to the plausibility test described above.

According to an aspect of the present disclosure, the system controller 8a is operable to send signals indicative of parameter values to the temperature controller 7. In an embodiment, the system controller 8a is operable to send a plurality of signals indicative of parameter values the temperature controller 7. The plurality of signals comprises signals indicative of parameter values for individual spaces 4a, 4b of the site. The plurality of signals can also comprise signals indicative of parameter values for individual rooms of the building.

The temperature controller 7 is operable to produce one or more parameter values from the signals received from the system controller 8a. Advantageously, the temperature controller 7 is operable to subject such parameter values to a plausibility test. If a parameter value is below a lower limit, that parameter value will be ignored by the temperature controller 7. If a parameter value is above an upper limit, that parameter value will also be ignored by the temperature controller 7. It is envisaged that the temperature controller 7 is operable to subject more than one parameter value to the plausibility test described above.

A bidirectional connection between the system controller 8a and the temperature controller 7 also affords communication from the temperature controller 7 to the system controller 8a. The temperature controller 7 can thus send temperature values of the spaces 4a, 4b of the site to the system controller 8a. Likewise, the temperature controller 7 can send temperature values of rooms of a building to the system controller 8a. More specifically, the temperature controller 7 can send temperature values for individual spaces 4a, 4b of the site to the system controller 8a. Likewise, the temperature controller 7 can send temperature values for rooms of a building to the system controller 8a.

It is envisaged that the temperature controller 7 is operable to send time series of temperature values for the spaces 4a, 4b of the site to the system controller 8a. The time series of temperature values for the spaces 4a, 4b can comprise temperature values obtained in time intervals. The time intervals can, by way of non-limiting example, be four hours or twelve hours or twenty-four hours. Likewise, the temperature controller 7 can be operable to send time series of temperature values for rooms of the building to the system controller 8a. The time series of temperature values for the rooms can comprise temperature values obtained in time intervals. The time intervals can, by way of non-limiting example, be four hours or twelve hours or twenty-four hours.

More specifically, the temperature controller 7 is operable to send time series of temperature values of individual spaces 4a, 4b of the site to the system controller 8a. The time series of temperature values of the individual spaces 4a, 4b can comprise temperature values obtained in time intervals. The time intervals can, by way of non-limiting example, be four hours or twelve hours or twenty-four hours. In a preferred embodiment, the time series of temperature values covers twenty-four hours hand is made up of time intervals of fifteen minutes. The time series thus comprises a total of ninety-six values. Likewise, the temperature controller 7 can send time series of temperature values of individual rooms of the building to the system controller 8a. The time series of temperature values of the individual rooms can comprise temperature values obtained in time intervals. The time intervals can, by way of non-limiting example, be four hours or twelve hours or twenty-four hours.

In an embodiment, the temperature controller 7 is operable to send maximum and minimum temperature values of the spaces 4a, 4b of the site to the system controller 8a. The maximum and minimum temperature values of the spaces 4a, 4b can be maximum and minimum temperature values obtained during a time interval. The time interval can, by way of non-limiting example, be four hours or twelve hours or twenty-four hours. In a preferred embodiment, the time series of maximum and minimum temperature values covers twenty-four hours hand is made up of time intervals of fifteen minutes. The time series thus comprises a total of ninety-six values. Likewise, the temperature controller 7 can send maximum and minimum temperature values of rooms of a building to the system controller 8a. The maximum and minimum temperature values of the rooms can be maximum and minimum temperature values obtained during a time interval. The time interval can, by way of non-limiting example, be four hours or twelve hours or twenty-four hours.

More specifically, the temperature controller 7 can send maximum and minimum temperature values of individual spaces 4a, 4b of the site to the system controller 8a. The maximum and minimum temperature values of the individual spaces 4a, 4b can be maximum and minimum temperature values obtained during a time interval. The time interval can, by way of non-limiting example, be four hours or twelve hours or twenty-four hours. In a preferred embodiment, the time series of maximum and minimum temperatures covers twenty-four hours hand is made up of time intervals of fifteen minutes. The time series thus comprises a total of ninety-six values. Likewise, the temperature controller 7 can send maximum and minimum temperature values of rooms of a building to the system controller 8a. The maximum and minimum temperature values of the individual rooms can be maximum and minimum temperature values obtained during a time interval. The time interval can, by way of non-limiting example, be four hours or twelve hours or twenty-four hours.

It is envisaged that the temperature controller 7 is operable to send time series of maximum and minimum temperature values of the spaces 4a, 4b of the site to the system controller 8a. The time series of maximum and minimum temperature values of the spaces 4a, 4b can comprise maximum and minimum temperature values obtained in time intervals. The time intervals can, by way of non-limiting example, be four hours or twelve hours or twenty-four hours. In a preferred embodiment, the time series of maximum and minimum temperatures covers twenty-four hours hand is made up of time intervals of fifteen minutes. The time series thus comprises a total of ninety-six values. Likewise, the temperature controller 7 can be operable to send time series of maximum and minimum temperature values of rooms of the building to the system controller 8a. The time series of maximum and minimum temperature values of the rooms can comprise maximum and minimum temperature values obtained in time intervals. The time intervals can, by way of non-limiting example, be four hours or twelve hours or twenty-four hours.

More specifically, the temperature controller 7 is operable to send time series of maximum and minimum temperature values of individual spaces 4a, 4b of the site to the system controller 8a. The time series of maximum and minimum temperature values of the individual spaces 4a, 4b can comprise maximum and minimum temperature values obtained in time intervals. The time intervals can, by way of non-limiting example, be four hours or twelve hours or twenty-four hours. In a preferred embodiment, the time series of maximum and minimum temperatures covers twenty-four hours hand is made up of time intervals of fifteen minutes. The time series thus comprises a total of ninety-six values. Likewise, the temperature controller 7 can send time series of maximum and minimum temperature values of individual rooms of the building to the system controller 8a. The time series of maximum and minimum temperature values of the individual rooms can comprise maximum and minimum temperature values obtained in time intervals. The time intervals can, by way of non-limiting example, be four hours or twelve hours or twenty-four hours.

The system controller 8a advantageously sends digital signals to the temperature controller 7. That is, communication from the system controller 8a to the temperature controller 7 involves a digital communication bus. Communication from the system controller 8a to the temperature controller 7 ideally involves a digital communication protocol.

The temperature controller 7 advantageously sends digital signals to system controller 8a. That is, communication from the temperature controller 7 to the system controller 8a involves the digital communication bus. The digital communication bus for communication from the temperature controller 7 to the system controller 8a preferably is the same as the digital communication bus for communication from the system controller 8a to the temperature controller 7. Communication from the temperature controller 7 to the system controller 8a ideally involves a digital communication protocol. The digital communication protocol used for communication from the temperature controller 7 to the system controller 8a preferably is the same as the digital communication protocol used for communication from the system controller 8a to the temperature controller 7.

Digital communication between the temperature controller 7 and the system controller 8a can also involve wireless communications. To that end, the temperature controller 7 and the system controller 8a can each comprise an interface for wireless communication and/or a controller for wireless communication. The interface for wireless communication and/or the controller for wireless communication can, by way of non-limiting example, rely on wireless solutions such as WLAN, KNX@ RF, Thread, Zigbee, and/or EnOcean®.

The temperature controller 7 can use the same interface for wireless communication and/or the same controller for wireless communication with the system controller 8a and with the sensors 5a, 5b. The temperature controller 7 can use different interfaces for wireless communication and/or different controllers for wireless communication with the system controller 8a and with the sensors 5a, 5b.

In an embodiment, the temperature controller 7 and the system controller 8a are separate controllers. In an alternate embodiment, the temperature controller 7 and the system controller 8a are arranged on the same system-on-a-chip. It is envisaged that the temperature controller 7 and the system controller 8a comprise the same microcontroller. It is envisaged that temperature controller 7 and the system controller 8a comprise the same microprocessor.

Source of cooling

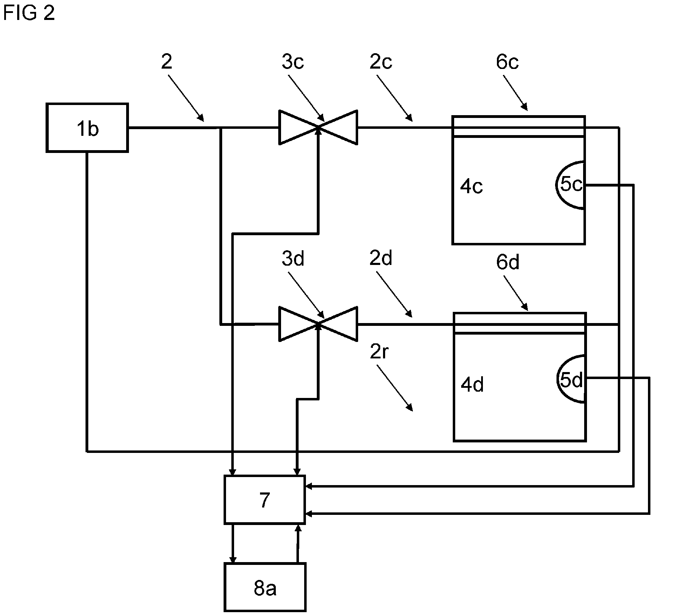

FIG 2 shows a site having a source of cooling 1b instead of a heat source 1a. In an embodiment the source of cooling 1b is different from the heat source 1a. In an alternate embodiment, the source of cooling 1a and the heat source 1a are the same. A combined source of cooling 1b and heat source 1a can, by way of non-limiting example, comprise a heat pump.

The source of cooling 1b advantageously comprises at least one of

- a mechanical heat pump,
- a Peltier heat pump,
- a solid-state refrigerator,
- a thermoelectric cooler.

In an embodiment, the source of cooling 1b comprises a mechanical heat pump and at least one of

- a Peltier heat pump,
- a solid-state refrigerator,
- a thermoelectric cooler.

According to an aspect of the instant disclosure, the source of cooling 1b operates the mechanical heat hump so long as the coefficient of performance of the mechanical heat pump is within acceptable limits. If the coefficient of performance of the mechanical heat pump is no longer within acceptable limits, the source of cooling 1b switches over to an alternate source selected from at least one of

- a Peltier heat pump,
- a solid-state refrigerator,
- a thermoelectric cooler.

It is envisaged that at least one space 4c, 4d shown in FIG 2 is associated with a thermally activated building structure (TABS) 6c, 6d. In an embodiment, a thermally activated building structure 6c, 6d forms at least one of

- a ceiling,
- a floor,
- a wall

of the at least one space 4c, 4d. In a special embodiment, the at least one space 4c, 4d comprises a thermally activated building structure 6c, 6d. According to an aspect of the present disclosure, all spaces 4c, 4d of the site are associated with at least one thermally activated building structure 6c, 6d. According to another aspect of the present disclosure, all spaces 4c, 4d of the site comprise at least one thermally activated building structure 6c, 6d. The third thermally activated building structure 6c as shown in FIG 2 is different from the fourth thermally activated building structure 6d as also shown in FIG 2. The third thermally activated building structure 6c and the fourth thermally activated building structure 6d are also different from the first thermally activated building structure 6a and from the second thermally activated building structure 6b.

The branches 2a - 2d are advantageously each different. The valves 3a - 3d are advantageously also each different. Likewise, the space 4a - 4d and the sensors 5a - 5d are preferably each different.

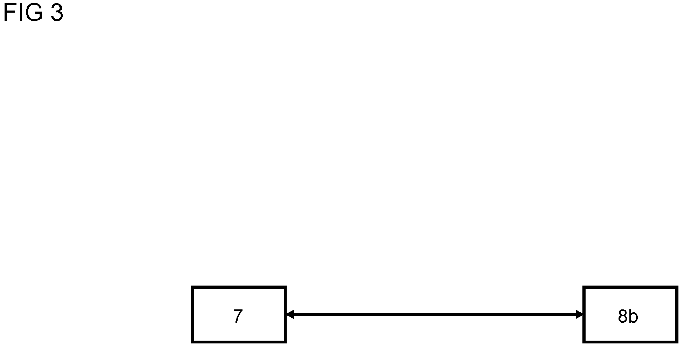

The system controller can also be arranged at a location that is remote from the site. Likewise, the system controller can be arranged at a location that is remote from the building. FIG 3 illustrates a system controller 8b that is arranged at a location that is remote from the temperature controller 7. It is envisaged that the system controller 8b is arranged at least one kilometre, preferably at least two kilometres, or even at least five kilometres from the temperature controller 7.

The bidirectional connection between the system controller 8b and the temperature controller 7 can involve a connectionless datagram service such as the Internet Protocol. The bidirectional connection between the system controller 8b and the temperature controller 7 can also involve a connection-oriented transport layer protocol service such as the Transmission Control Protocol.

In an embodiment, the system controller 8b comprises a cloud computer. In a special embodiment, the system controller 8b is a cloud computer.

It is envisaged that the system controller 8a, 8b connects to a multitude of temperature controllers 7. The connections between the system controller 8a, 8b and the multitude of temperature controllers 7 involve bidirectional communications between pairs, each pair comprising the system controller 8a, 8b and a temperature controller 7. A system controller 8a, 8b can, by way of non-limiting example, orchestrate a fleet of similar sites. The sites can be similar in geographical location and/or in size and/or in structure. Likewise, a system controller 8a, 8b can, by way of another non-limiting example, orchestrate a fleet of similar buildings. The buildings can be similar in geographical location and/or in size and/or in structure.

Clusters

The system controller 8a, 8b can cluster various spaces 4a - 4d of a site. In an embodiment, the system controller 8a, 8b has thermal capacitances of the spaces 4a - 4d stored in its memory. The system controller 8a, 8b can then cluster spaces 4a - 4d with similar individual thermal capacitances. The system controller 8a, 8b can, by way of example, cluster spaces 4a - 4d where the individual thermal capacitances of such spaces 4a - 4d differ by less than twenty percent, by less than thirty percent, or by less than fifty percent. The system controller 8a, 8b can also start with a given number of clusters such as two clusters of three clusters or five clusters. The system controller 8a, 8b then clusters spaces 4a - 4d having similar individual thermal capacitances until it arrives at the predetermined number of clusters.

A thermal capacitance is connected to the energy storage capacity and/or power storage capacity. A thermal capacitance ideally assumes no energy losses. It is defined as the amount of power necessary to change the temperature rate of a medium such as air by one unit in one second. More specifically, the thermal capacitance is the heat flow necessary to change the temperature rate of a medium such as air by one unit in one second. The unit of change can, by way of non-limiting example, be one Kelvin.

The system controller 8a, 8b can also cluster various spaces 4a - 4d of a site based on typical usage. In an embodiment, the system controller 8a, 8b has usages of the spaces 4a - 4d stored in its memory. The system controller 8a, 8b can then cluster spaces 4a - 4d with similar usages. The system controller 8a, 8b can also start with a given number of clusters such as two clusters of three clusters or five clusters. The system controller 8a, 8b then clusters spaces 4a - 4d having similar usages until it arrives at the predetermined number of clusters.

Likewise, the system controller 8a, 8b can cluster various rooms of a building. In an embodiment, the system controller 8a, 8b has individual thermal capacitances of the rooms stored in its memory. The system controller 8a, 8b can then cluster rooms with similar individual thermal capacitances. The system controller 8a, 8b can, by way of example, cluster rooms where the individual thermal capacitances of such rooms differ by less than twenty percent, by less than thirty percent, or by less than fifty percent. The system controller 8a, 8b can also start with a given number of clusters such as two clusters of three clusters or five clusters. The system controller 8a, 8b then clusters rooms having similar individual thermal capacitances until it arrives at the predetermined number of clusters.

The system controller 8a, 8b can also cluster various rooms of a building based on typical usage. In an embodiment, the system controller 8a, 8b has usages of the rooms stored in its memory. The system controller 8a, 8b can then cluster rooms with similar usages. The system controller 8a, 8b can also start with a given number of clusters such as two clusters of three clusters or five clusters. The system controller 8a, 8b then clusters rooms having similar usages until it arrives at the predetermined number of clusters.

The system controller 8a, 8b then determines an effective temperature for each cluster of spaces 4a - 4d. To that end, the system controller 8a, 8b obtains temperature values of the spaces 4a - 4d. The temperature values are ideally obtained from the temperature controller 7. The system controller 8a, 8b can, by way of example, determine the effective temperature as an arithmetic average of the temperatures of the spaces 4a - 4d. In a special embodiment, the system controller 8a, 8b determines the effective temperature by calculating an arithmetic average of the temperatures of the spaces 4a - 4d.

The system controller 8a, 8b can, by way of another example, determine the effective temperature by determining a weighted average of the temperatures of the spaces 4a - 4d. More specifically, the system controller 8a, 8b can load individual weights of the spaces 4a - 4d from its memory and employ the individual weights to determine the weighted average. In a special embodiment, the system controller 8a, 8b employs the individual weights to calculate the weighted average.

The system controller 8a, 8b can also load individual thermal capacitances of the spaces 4a - 4d from its memory. The system controller 8a, 8b then produces individual weights from the individual thermal capacitances. The system controller 8a, 8b eventually employs the individual weights to determine the weighted average. In a special embodiment, the system controller 8a, 8b employs the individual weights to calculate the weighted average.

According to an aspect of the present disclosure, the system controller 8a, 8b loads individual surface areas of the spaces 4a - 4d from its memory. The system controller 8a, 8b then produces individual weights from the individual surfaces areas. The system controller 8a, 8b eventually employs the individual weights to determine the weighted average. In a special embodiment, the system controller 8a, 8b employs the individual weights to calculate the weighted average.

According to another aspect of the present disclosure, the system controller 8a, 8b loads individual building volumes of the spaces 4a - 4d from its memory. The system controller 8a, 8b then produces individual weights from the individual building volumes. The system controller 8a, 8b eventually employs the individual weights to determine the weighted average. In a special embodiment, the system controller 8a, 8b employs the individual weights to calculate the weighted average.

The system controller 8a, 8b can likewise determine an effective temperature for each cluster of rooms. To that end, the system controller 8a, 8b obtains temperature values of the rooms. The temperature values are ideally obtained from the temperature controller 7. The system controller 8a, 8b can, by way of example, determine the effective temperature as an arithmetic average of the temperatures of the rooms. In a special embodiment, the system controller 8a, 8b determines the effective temperature by calculating an arithmetic average of the temperatures of the rooms.

The system controller 8a, 8b can, by way of another example, determine the effective temperature by determining a weighted average of the temperatures of the rooms. More specifically, the system controller 8a, 8b can load individual weights of the rooms from its memory and employ the individual weights to determine the weighted average. In a special embodiment, the system controller 8a, 8b employs the individual weights to calculate the weighted average.

The system controller 8a, 8b can also load individual thermal capacitances of the rooms from its memory. The system controller 8a, 8b then produces individual weights from the individual thermal capacitances. The system controller 8a, 8b eventually employs the individual weights to determine the weighted average. In a special embodiment, the system controller 8a, 8b employs the individual weights to calculate the weighted average.

According to an aspect of the present disclosure, the system controller 8a, 8b loads individual surface areas of the rooms from its memory. The system controller 8a, 8b then produces individual weights from the individual surfaces areas. The system controller 8a, 8b eventually employs the individual weights to determine the weighted average. In a special embodiment, the system controller 8a, 8b employs the individual weights to calculate the weighted average.

According to another aspect of the present disclosure, the system controller 8a, 8b loads individual building volumes of the rooms from its memory. The system controller 8a, 8b then produces individual weights from the individual building volumes. The system controller 8a, 8b eventually employs the individual weights to determine the weighted average. In a special embodiment, the system controller 8a, 8b employs the individual weights to calculate the weighted average.

It is worth stressing that clustered spaces 4a - 4d of the site reduce inaccuracies caused by deviations of individual spaces 4a - 4d. Likewise, clustered rooms of the building reduce inaccuracies caused by deviations of individual rooms.

Thermal power balance

The system controller 8a, 8b next determines a system of relationships forming a thermal power balance:

$$C_c \cdot \left(T_{c,t+1} - T_{c,t}\right) = \Delta t \cdot \left(\dot{Q}_{C,t}^{heat} - \dot{Q}_{C,t}^{cool} - \dot{Q}_{C,t}^{demand\ for\ heat} + \dot{Q}_{C,t}^{demand\ for\ cooling}\right)$$

In this thermal power balance, $C_c$ denotes a thermal capacitance for the cluster $C$. According to an aspect of the present disclosure, the system controller 8a, 8b has thermal capacitances of the spaces 4a - 4d of the cluster $C$ stored in its memory. The system controller 8a, 8b adds the thermal capacitances of the spaces 4a - 4d of the cluster up to determine the thermal capacitance $C_c$ of the cluster $C$. In a special embodiment, the system controller 8a, 8b adds the thermal capacitances of the spaces 4a - 4d of the cluster $C$ up to calculate the thermal capacitance $C_c$ of the cluster $C$.

Likewise, the system controller 8a, 8b can have thermal capacitances of the rooms of the cluster stored $C$ in its memory. The system controller 8a, 8b adds the thermal capacitances of the rooms of the cluster $C$ up to determine the thermal capacitance $C_c$ of the cluster $C$. In a special embodiment, the system controller 8a, 8b adds the thermal capacitances of the rooms of the cluster up to calculate the thermal capacitance $C_c$ of the cluster $C$.

According to another aspect of the present disclosure, the system controller 8a, 8b has individual surface areas of the spaces 4a - 4d of the cluster stored in its memory. The system controller 8a, 8b adds the individual surface areas of the spaces 4a - 4d of the cluster *C* up to determine a total surface area of the cluster *C*. The system controller 8a, 8b ideally adds the individual surface areas of the spaces 4a - 4d of the cluster *C* up to calculate a total surface area of the cluster *C*. The system controller 8a, 8b then estimates the thermal capacitance $C_c$ of the cluster *C* as a function of the total surface area. In a special embodiment, the system controller 8a, 8b determines the thermal capacitance $C_c$ of the cluster *C* as a function of the total surface area. In another special embodiment, the system controller 8a, 8b calculates the thermal capacitance $C_c$ of the cluster *C* as a function of the total surface area.

Likewise, the system controller 8a, 8b can have individual surface areas of the rooms of the cluster *C* stored in its memory. The system controller 8a, 8b adds the individual surface areas of the rooms of the cluster *C* up to determine a total surface area of the cluster *C*. The system controller 8a, 8b ideally adds the individual surface areas of the rooms of the cluster *C* up to calculate a total surface area of the cluster *C*. The system controller 8a, 8b then estimates the thermal capacitance $C_c$ of the cluster *C* as a function of the total surface area. In a special embodiment, the system controller 8a, 8b determines the thermal capacitance $C_c$ of the cluster *C* as a function of the total surface area. In another special embodiment, the system controller 8a, 8b calculates the thermal capacitance $C_c$ of the cluster *C* as a function of the total surface area.

According to yet another aspect of the present disclosure, the system controller 8a, 8b has individual building volumes of the spaces 4a - 4d of the cluster stored in its memory. The system controller 8a, 8b adds the individual building volumes of the spaces 4a - 4d of the cluster *C* up to determine a total building volume of the cluster *C*. The system controller 8a, 8b ideally adds the individual building volumes of the spaces 4a - 4d of the cluster *C* up to calculate a total building volume of the cluster *C*. The system controller 8a, 8b then estimates the thermal capacitance $C_c$ of the cluster *C* as a function of the total building volume. In a special embodiment, the system controller 8a, 8b determines the thermal capacitance $C_c$ of the cluster *C* as a function of the total building volume. In another special embodiment, the system controller 8a, 8b calculates the thermal capacitance $C_c$ of the cluster *C* as a function of the total building volume.

Likewise, the system controller 8a, 8b can have individual building volumes of the rooms of the cluster *C* stored in its memory. The system controller 8a, 8b adds the individual building volumes of the rooms of the cluster *C* up to determine a total building volume of the cluster *C*. The system controller 8a, 8b ideally adds the individual building volumes of the rooms of the cluster up to calculate a total building volume of the cluster *C*. The system controller 8a, 8b then estimates the thermal capacitance $C_c$ of the cluster *C* as a function of the total building volume. In a special embodiment, the system controller 8a, 8b determines the thermal capacitance $C_c$ of the cluster *C* as a function of the total building volume. In another special embodiment, the system controller 8a, 8b calculates the thermal capacitance $C_c$ of the cluster *C* as a function of the total building volume.

The above thermal power balance also involves characteristic temperatures $T_{c,t}$ and $T_{c,t+1}$ of the cluster *C*. The effective temperatures $T_{c,t}$ and $T_{c,t+1}$ refer to a point in time *t* and to a next point in time *t+1*, respectively. In a preferred embodiment, the points in time for the temperatures $T_{c,t}$ and $T_{c,t+1}$ are fifteen minutes apart. In an embodiment, the points in time for the temperatures $T_{c,t}$ and $T_{c,t+1}$ are four hours apart. That is, the time interval $\Delta t$ is four hours. In another embodiment, the points in time for the temperatures $T_{c,t}$ and $T_{c,t+1}$ are twelve hours apart. That is, the time interval $\Delta t$ is twelve hours. In yet another embodiment, the points in time for the temperatures $T_{c,t}$ and $T_{c,t+1}$ are twenty-four hours apart. That is, the time interval $\Delta t$ is twenty-four hours.

The right-hand side of the thermal power balance involves a heating power $\dot{Q}_{C,t}^{heat}$. The heating power $\dot{Q}_{C,t}^{heat}$ is a heating power of a cluster *C* and at a point in time *t*. Lower and upper limits apply to the heating power $\dot{Q}_{C,t}^{heat}$. These lower and upper limits are determined by the thermal energy exchangers such as room heaters in the cluster *C*. In an embodiment, the system controller 8a, 8b stores values of the lower and upper limits of heating power $\dot{Q}_{C,t}^{heat}$ in its memory.

It is also envisaged that the memory of the system controller 8a, 8b stores values of lower and upper limits of heating power $\dot{Q}_{C,t}^{heat}$ of the individual spaces 4a - 4d of the cluster *C*. The system controller 8a, 8b can thus estimate a lower limit of heating power $\dot{Q}_{C,t}^{heat}$ by adding the lower limits of the individual spaces 4a - 4d of the cluster *C* up. In an embodiment, the system controller 8a, 8b can determine a lower limit of heating power $\dot{Q}_{C,t}^{heat}$ by adding the lower limits for the individual spaces 4a - 4d of the cluster *C* up. In a special embodiment, the system controller 8a, 8b can calculate a lower limit of heating power $\dot{Q}_{C,t}^{heat}$ by adding the lower limits for the individual spaces 4a - 4d of the cluster *C* up. Likewise, the system controller 8a, 8b can estimate an upper limit of heating power $\dot{Q}_{C,t}^{heat}$ by adding the upper limits for the individual spaces 4a - 4d of the cluster *C* up. In an embodiment, the system controller 8a, 8b can determine an upper limit of heating power $\dot{Q}_{C,t}^{heat}$ by adding the upper limits for the individual spaces 4a - 4d of the cluster $C$ up.

In a special embodiment, the system controller 8a, 8b can calculate an upper limit of heating power $\dot{Q}_{C,t}^{heat}$ by adding the upper limits for the individual spaces 4a - 4d of the cluster $C$ up.

It is still envisaged that the memory of the system controller 8a, 8b stores values of lower and upper limits of heating power $\dot{Q}_{C,t}^{heat}$ of the individual rooms of the cluster $C$. The system controller 8a, 8b can thus estimate a lower limit of heating power $\dot{Q}_{C,t}^{heat}$ by adding the lower limits for the individual rooms of the cluster $C$ up. In an embodiment, the system controller 8a, 8b can determine a lower limit of heating power $\dot{Q}_{C,t}^{heat}$ by adding the lower limits for the individual rooms of the cluster $C$ up. In a special embodiment, the system controller 8a, 8b can calculate a lower limit of heating power $\dot{Q}_{C,t}^{heat}$ by adding the lower limits for the individual rooms of the cluster $C$ up. Likewise, the system controller 8a, 8b can estimate an upper limit of heating power $\dot{Q}_{C,t}^{heat}$ by adding the upper limits for the individual rooms of the cluster $C$ up. In an embodiment, the system controller 8a, 8b can determine an upper limit of heating power $\dot{Q}_{C,t}^{heat}$ by adding the upper limits for the individual rooms of the cluster $C$ up. In a special embodiment, the system controller 8a, 8b can calculate an upper limit of heating power $\dot{Q}_{C,t}^{heat}$ by adding the upper limits for the individual rooms of the cluster $C$ up.

According to an aspect of the present disclosure, the memory of the system controller 8a, 8b stores values of surface areas of the individual spaces 4a - 4d of the cluster $C$. The system controller 8a, 8b can thus estimate a lower limit of heating power $\dot{Q}_{C,t}^{heat}$ from a sum of the surface areas of the individual spaces 4a - 4d of the cluster. In an embodiment, the system controller 8a, 8b can determine a lower limit of heating power $\dot{Q}_{C,t}^{heat}$ from a sum of the surface areas of the individual spaces 4a - 4d of the cluster. In a special embodiment, the system controller 8a, 8b can calculate a lower limit of heating power $\dot{Q}_{C,t}^{heat}$ from a sum of the surface areas of the individual spaces 4a - 4d of the cluster. Likewise, the system controller 8a, 8b can estimate an upper limit of heating power $\dot{Q}_{C,t}^{heat}$ from a sum of the surface areas of the cluster. In an embodiment, the system controller 8a, 8b can determine an upper limit of heating power $\dot{Q}_{C,t}^{heat}$ from a sum of the surface areas of the cluster. In a special embodiment, the system controller 8a, 8b can calculate an upper limit of heating power $\dot{Q}_{C,t}^{heat}$ from a sum of the surface areas of the individual spaces 4a - 4d of the cluster.

According to another aspect of the present disclosure, the memory of the system controller 8a, 8b stores values of surface areas of the individual rooms of the cluster. The system controller 8a, 8b can thus estimate a lower limit of heating power $\dot{Q}_{C,t}^{heat}$ from a sum of the surface areas of the individual rooms of the cluster. In an embodiment, the system controller 8a, 8b can determine a lower limit of heating power $\dot{Q}_{C,t}^{heat}$ from a sum of the surface areas of the individual rooms of the cluster. In a special embodiment, the system controller 8a, 8b can calculate a lower limit of heating power $\dot{Q}_{C,t}^{heat}$ from a sum of the surface areas of the individual rooms of the cluster. Likewise, the system controller 8a, 8b can estimate an upper limit of heating power $\dot{Q}_{C,t}^{heat}$ from a sum of the surface areas of the cluster. In an embodiment, the system controller 8a, 8b can determine an upper limit of heating power $\dot{Q}_{C,t}^{heat}$ from a sum of the surface areas of the cluster. In a special embodiment, the system controller 8a, 8b can calculate an upper limit of heating power $\dot{Q}_{C,t}^{heat}$ from a sum of the surface areas of the individual rooms of the cluster.

In an embodiment, the memory of the system controller 8a, 8b stores values of building volumes for the individual spaces 4a - 4d of the cluster. The system controller 8a, 8b can thus estimate a lower limit of heating power $\dot{Q}_{C,t}^{heat}$ from a sum of the building volumes of the individual spaces 4a - 4d of the cluster. In an embodiment, the system controller 8a, 8b can determine a lower limit of heating power $\dot{Q}_{C,t}^{heat}$ from a sum of the building volumes of the individual spaces 4a - 4d of the cluster. In a special embodiment, the system controller 8a, 8b can calculate a lower limit of heating power $\dot{Q}_{C,t}^{heat}$ from a sum of the building volumes of the individual spaces 4a - 4d of the cluster. Likewise, the system controller 8a, 8b can estimate an upper limit of heating power $\dot{Q}_{C,t}^{heat}$ from a sum of the building volumes of the cluster. In an embodiment, the system controller 8a, 8b can determine an upper limit of heating power $\dot{Q}_{C,t}^{heat}$ from a sum of the building volumes of the cluster. In a special embodiment, the system controller 8a, 8b can calculate an upper limit of heating power $\dot{Q}_{C,t}^{heat}$ from a sum of the building volumes of the individual spaces 4a - 4d of the cluster.

In another embodiment, the memory of the system controller 8a, 8b stores values of building volumes for the individual rooms of the cluster *C*. The system controller 8a, 8b can thus estimate a lower limit of heating power $\dot{Q}_{C,t}^{heat}$ from a sum of the building volumes of the individual rooms of the cluster *C*. In an embodiment, the system controller 8a, 8b can determine a lower limit of heating power $\dot{Q}_{C,t}^{heat}$ from a sum of the building volumes of the individual rooms of the cluster *C*. In a special embodiment, the system controller 8a, 8b can calculate a lower limit of heating power $\dot{Q}_{C,t}^{heat}$ from a sum of the building volumes of the individual rooms of the cluster *C*. Likewise, the system controller 8a, 8b can estimate an upper limit of heating power $\dot{Q}_{C,t}^{heat}$ from a sum of the building volumes of the cluster *C*. In an embodiment, the system controller 8a, 8b can determine an upper limit of heating power $\dot{Q}_{C,t}^{heat}$ from a sum of the building volumes of the cluster *C*. In a special embodiment, the system controller 8a, 8b can calculate an upper limit of heating power $\dot{Q}_{C,t}^{heat}$ from a sum of the building volumes of the individual rooms of the cluster *C*.

The right-hand side of the thermal power balance involves a cooling power $\dot{Q}_{C,t}^{cool}$. The cooling power $\dot{Q}_{C,t}^{cool}$ is a cooling power of a cluster *C* and at a point in time *t*. Lower and upper limits apply to the cooling power $\dot{Q}_{C,t}^{cool}$. These lower and upper limits are determined by the thermal energy exchangers such as chilled beams in the cluster *C*. In an embodiment, the system controller 8a, 8b stores values of the lower and upper limits of cooling power $\dot{Q}_{C,t}^{cool}$ in its memory.

It is also envisaged that the memory of the system controller 8a, 8b stores values of lower and upper limits of cooling power $\dot{Q}_{C,t}^{cool}$ of the individual spaces 4a - 4d of the cluster *C*. The system controller 8a, 8b can thus estimate a lower limit of cooling power $\dot{Q}_{C,t}^{cool}$ by adding the lower limits of the individual spaces 4a - 4d of the cluster *C* up. In an embodiment, the system controller 8a, 8b can determine a lower limit of cooling power $\dot{Q}_{C,t}^{cool}$ by adding the lower limits for the individual spaces 4a - 4d of the cluster *C* up. In a special embodiment, the system controller 8a, 8b can calculate a lower limit of cooling power $\dot{Q}_{C,t}^{cool}$ by adding the lower limits for the individual spaces 4a - 4d of the cluster *C* up. Likewise, the system controller 8a, 8b can estimate an upper limit of cooling power $\dot{Q}_{C,t}^{cool}$ by adding the upper limits for the individual spaces 4a - 4d of the cluster *C* up. In an embodiment, the system controller 8a, 8b can determine an upper limit of cooling power $\dot{Q}_{C,t}^{cool}$ by adding the upper limits for the individual spaces 4a - 4d of the cluster *C* up. In a special embodiment, the system controller 8a, 8b can calculate an upper limit of cooling power $\dot{Q}_{C,t}^{cool}$ by adding the upper limits for the individual spaces 4a - 4d of the cluster *C* up.

It is still envisaged that the memory of the system controller 8a, 8b stores values of lower and upper limits of cooling power $\dot{Q}_{C,t}^{cool}$ of the individual rooms of the cluster *C*. The system controller 8a, 8b can thus estimate a lower limit of cooling power $\dot{Q}_{C,t}^{cool}$ by adding the lower limits for the individual rooms of the cluster *C* up. In an embodiment, the system controller 8a, 8b can determine a lower limit of cooling power $\dot{Q}_{C,t}^{cool}$ by adding the lower limits for the individual rooms of the cluster $C$ up. In a special embodiment, the system controller 8a, 8b can calculate a lower limit of cooling power $\dot{Q}_{C,t}^{cool}$ by adding the lower limits for the individual rooms of the cluster $C$ up. Likewise, the system controller 8a, 8b can estimate an upper limit of cooling power $\dot{Q}_{C,t}^{cool}$ by adding the upper limits for the individual rooms of the cluster $C$ up. In an embodiment, the system controller 8a, 8b can determine an upper limit of cooling power $\dot{Q}_{C,t}^{cool}$ by adding the upper limits for the individual rooms of the cluster $C$ up. In a special embodiment, the system controller 8a, 8b can calculate an upper limit of cooling power $\dot{Q}_{C,t}^{cool}$ by adding the upper limits for the individual rooms of the cluster $C$ up.

According to an aspect of the present disclosure, the memory of the system controller 8a, 8b stores values of surface areas of the individual spaces 4a - 4d of the cluster $C$. The system controller 8a, 8b can thus estimate a lower limit of cooling power $\dot{Q}_{C,t}^{cool}$ from a sum of the surface areas of the individual spaces 4a - 4d of the cluster $C$. In an embodiment, the system controller 8a, 8b can determine a lower limit of cooling power $\dot{Q}_{C,t}^{cool}$ from a sum of the surface areas of the individual spaces 4a - 4d of the cluster $C$. In a special embodiment, the system controller 8a, 8b can calculate a lower limit of cooling power $\dot{Q}_{C,t}^{cool}$ from a sum of the surface areas of the individual spaces 4a - 4d of the cluster $C$. Likewise, the system controller 8a, 8b can estimate an upper limit of cooling power $\dot{Q}_{C,t}^{cool}$ from a sum of the surface areas of the cluster $C$. In an embodiment, the system controller 8a, 8b can determine an upper limit of cooling power $\dot{Q}_{C,t}^{cool}$ from a sum of the surface areas of the cluster $C$. In a special embodiment, the system controller 8a, 8b can calculate an upper limit of cooling power $\dot{Q}_{C,t}^{cool}$ from a sum of the surface areas of the individual spaces 4a - 4d of the cluster $C$.

According to another aspect of the present disclosure, the memory of the system controller 8a, 8b stores values of surface areas of the individual rooms of the cluster $C$. The system controller 8a, 8b can thus estimate a lower limit of cooling power $\dot{Q}_{C,t}^{cool}$ from a sum of the surface areas of the individual rooms of the cluster $C$. In an embodiment, the system controller 8a, 8b can determine a lower limit of cooling power $\dot{Q}_{C,t}^{cool}$ from a sum of the surface areas of the individual rooms of the cluster $C$. In a special embodiment, the system controller 8a, 8b can calculate a lower limit of cooling power $\dot{Q}_{C,t}^{cool}$ from a sum of the surface areas of the individual rooms of the cluster $C$. Likewise, the system controller 8a, 8b can estimate an upper limit of cooling power $\dot{Q}_{C,t}^{cool}$ from a sum of the surface areas of the cluster $C$. In an embodiment, the system controller 8a, 8b can determine an upper limit of cooling power $\dot{Q}_{C,t}^{cool}$ from a sum of the surface areas of the cluster $C$. In a special embodiment, the system controller 8a, 8b can calculate an upper limit of cooling power $\dot{Q}_{C,t}^{cool}$ from a sum of the surface areas of the individual rooms of the cluster $C$.

In an embodiment, the memory of the system controller 8a, 8b stores values of building volumes for the individual spaces 4a - 4d of the cluster $C$. The system controller 8a, 8b can thus estimate a lower limit of cooling power $\dot{Q}_{C,t}^{cool}$ from a sum of the building volumes of the individual spaces 4a - 4d of the cluster $C$. In an embodiment, the system controller 8a, 8b can determine a lower limit of cooling power $\dot{Q}_{C,t}^{cool}$ from a sum of the building volumes of the individual spaces 4a - 4d of the cluster $C$. In a special embodiment, the system controller 8a, 8b can calculate a lower limit of cooling power $\dot{Q}_{C,t}^{cool}$ from a sum of the building volumes of the individual spaces 4a - 4d of the cluster $C$. Likewise, the system controller 8a, 8b can estimate an upper limit of cooling power $\dot{Q}_{C,t}^{cool}$ from a sum of the building volumes of the cluster $C$. In an embodiment, the system controller 8a, 8b can determine an upper limit of cooling power $\dot{Q}_{C,t}^{cool}$ from a sum of the building volumes of the cluster *C*. In a special embodiment, the system controller 8a, 8b can calculate an upper limit of cooling power $\dot{Q}_{C,t}^{cool}$ from a sum of the building volumes of the individual spaces 4a - 4d of the cluster *C*.

In another embodiment, the memory of the system controller 8a, 8b stores values of building volumes for the individual rooms of the cluster *C*. The system controller 8a, 8b can thus estimate a lower limit of cooling power $\dot{Q}_{C,t}^{cool}$ from a sum of the building volumes of the individual rooms of the cluster *C*. In an embodiment, the system controller 8a, 8b can determine a lower limit of cooling power $\dot{Q}_{C,t}^{cool}$ from a sum of the building volumes of the individual rooms of the cluster *C*. In a special embodiment, the system controller 8a, 8b can calculate a lower limit of cooling power $\dot{Q}_{C,t}^{cool}$ from a sum of the building volumes of the individual rooms of the cluster *C*. Likewise, the system controller 8a, 8b can estimate an upper limit of cooling power $\dot{Q}_{C,t}^{cool}$ from a sum of the building volumes of the cluster *C*. In an embodiment, the system controller 8a, 8b can determine an upper limit of cooling power $\dot{Q}_{C,t}^{cool}$ from a sum of the building volumes of the cluster *C*. In a special embodiment, the system controller 8a, 8b can calculate an upper limit of cooling power $\dot{Q}_{C,t}^{cool}$ from a sum of the building volumes of the individual rooms of the cluster *C*.

The right-hand side of the thermal power balance involves a demand for heat $\dot{Q}_{C,t}^{demand\ for\ heat}$. $\dot{Q}_{C,t}^{demand\ for\ heat}$ is a demand for heat of a cluster *C* and at a point in time *t*.

A demand for heat $\dot{Q}_{C,t}^{demand\ for\ heat}$ is advantageously estimated from at least one of

- historical data for the cluster *C*,
- a load profile of the cluster *C*,
- positions of the valves 3a - 3d within the cluster *C*.

A demand for heat $\dot{Q}_{C,t}^{demand\ for\ heat}$ is advantageously determined from at least one of

- historical data for the cluster *C*,
- a load profile of the cluster *C*,
- positions of the valves 3a - 3d within the cluster *C*.

A demand for heat $\dot{Q}_{C,t}^{demand\ for\ heat}$ is advantageously calculated from at least one of

- historical data for the cluster *C*,
- a load profile of the cluster *C*,
- positions of the valves 3a - 3d within the cluster *C*.

The system controller 8a, 8b can also leverage its knowledge of the amount of sourced heating power $\dot{Q}_{t}^{heat\ source}$. The heat source 1a can, by way of example, send values of sourced heating power $\dot{Q}_{t}^{heat\ source}$ to the system controller 8a, 8b. The heat source 1a can, by way of another example, send values of sourced heating power $\dot{Q}_{t}^{heat\ source}$ to the temperature controller 7. The temperature controller 7 then sends these values to the system controller 8a, 8b.

Buffer

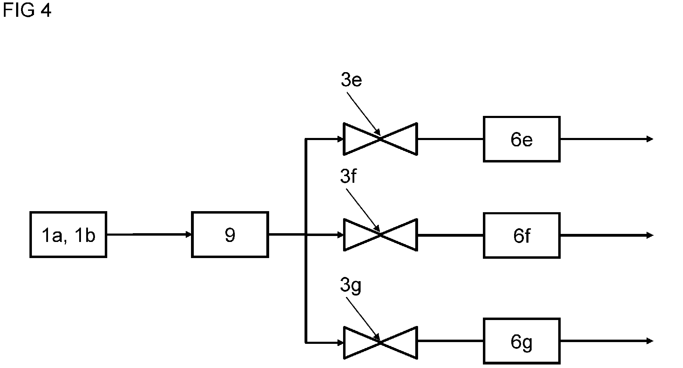

The site can also provide a buffer 9 as shown in FIG 4. The buffer 9 preferably comprises a buffer for thermal power. The buffer 9 ideally is a buffer for thermal power. The buffer 9 can, by way of example, send values of buffered thermal power to the system controller 8a, 8b. The buffer 9 can, by way of another example, send values of buffered thermal power to the temperature controller 7. The temperature controller 7 then sends these values to the system controller 8a, 8b.

The buffer 9 can also comprise a sensor such as a temperature sensor. The buffer 9 can, by way of example, record one or more signals indicative of temperature inside the buffer 9. The buffer 9 then sends these signals to the temperature controller 7. The temperature controller 7 is operable to produce one or more values of temperature inside the buffer 9 from the one or more signals received from the buffer 9. The temperature controller 7 is also operable to send the one or more values of temperature to the system controller 8a, 8b. In so doing, the temperature controller 7 preferably uses a digital communication bus. The temperature controller 7 ideally uses a digital communication protocol to send the one or more values of temperature inside the buffer 9 to the system controller 8a, 8b.

It is also envisaged that the temperature controller 7 is operable to produce values of thermal power buffered inside the buffer 9 from the one or more signals received from the buffer 9. The temperature controller 7 is also operable to send the one or more values of thermal power to the system controller 8a, 8b. In so doing, the temperature controller 7 preferably uses a digital communication bus. The temperature controller 7 ideally uses a digital communication protocol to send the one or more values of buffered thermal power to the system controller 8a, 8b.

In an embodiment, the buffer 9 is in fluid communication with the heat source 1a. In an alternate embodiment, the buffer 9 is in fluid communication with the source of cooling 1b. The system controller 8a, 8b eventually estimates an overall demand for heat $\dot{Q}_t^{demand\ for\ heat}$ based on the sourced heating power $\dot{Q}_t^{heat\ source}$ and based on the one or more values of temperature inside the buffer 9. In a special embodiment, the overall demand for heat $\dot{Q}_t^{demand\ for\ heat}$ is estimated based on the sourced heating power $\dot{Q}_t^{heat\ source}$ and based on a time series of values of temperature inside the buffer 9. The system controller 8a, 8b can establish a thermal power balance for the buffer 9 as it estimates the overall demand for heat $\dot{Q}_t^{demand\ for\ heat}$. The system controller 8a, 8b can also use the thermal power balance for the buffer 9 as it estimates the overall demand for heat $\dot{Q}_t^{demand\ for\ heat}$.

It is also envisaged that the system controller 8a, 8b estimates an overall demand for heat $\dot{Q}_t^{demand\ for\ heat}$ based on the sourced heating power $\dot{Q}_t^{heat\ source}$ and based on the one or more values of buffered thermal power. In a special embodiment, the overall demand for heat $\dot{Q}_t^{demand\ for\ heat}$ is estimated based on the sourced heating power $\dot{Q}_t^{heat\ source}$ and based on a time series of values of buffered thermal power. The system controller 8a, 8b can establish a thermal power balance for the buffer 9 as it estimates the overall demand for heat $\dot{Q}_t^{demand\ for\ heat}$. The system controller 8a, 8b can also use the thermal power balance for the buffer 9 as it estimates the overall demand for heat $\dot{Q}_t^{demand\ for\ heat}$.

The thermal buffer 9 is in fluid communication with one or more valves 3e of a first cluster. The one or more valves 3e of the first cluster are in fluid communication with one or more thermally activated building structures 6e of the first cluster. The thermal buffer 9 is also in fluid communication with one or more valves 3f of a second cluster. The one or more valves 3f of the second cluster are in fluid communication with one or more thermally activated building structures 6f of the second cluster. The thermal buffer 9 is still in fluid communication with one or more valves 3g of a third cluster. The one or more valves 3g of the third cluster are in fluid communication with one or more thermally activated building structures 6g of the second cluster.

According to an aspect of the present disclosure, the heat source 1a is in direct fluid communication with one or more valves 3e of a first cluster. The one or more valves 3e of the first cluster are in direct fluid communication with one or more thermally activated building structures 6e of the first cluster. The heat source 1a is also in direct fluid communication with one or more valves 3f of a second cluster. The one or more valves 3f of the second cluster are in direct fluid communication with one or more thermally activated building structures 6f of the second cluster. The heat source 1a is still in direct fluid communication with one or more valves 3g of a third cluster. The one or more valves 3g of the third cluster are in direct fluid communication with one or more thermally activated building structures 6g of the third cluster.

According to another aspect of the present disclosure, the source of cooling 1b is in direct fluid communication with one or more valves 3e of a first cluster. The one or more valves 3e of the first cluster are in direct fluid communication with one or more thermally activated building structures 6e of the first cluster. The source of cooling 1b is also in direct fluid communication with one or more valves 3f of a second cluster. The one or more valves 3f of the second cluster are in direct fluid communication with one or more thermally activated building structures 6f of the second cluster. The source of cooling 1b is still in direct fluid communication with one or more valves 3g of a third cluster. The one or more valves 3g of the third cluster are in direct fluid communication with one or more thermally activated building structures 6g of the second cluster.

It is, by way of non-limiting example, envisaged that delays between cooling and/or heating and consecutive changes in temperature are factored in. To that end, delays between cooling and/or heating and consecutive changes temperature can be determined by a temperature controller 7. That way, temperature controllers 7 can determine such delays for individual rooms of the building and/or for individual spaces 4a - 4d of the site. Temperature controllers 7 can also determine delays between cooling and/or heating and consecutive temperature changes for individual clusters of the site. Delays between cooling and/or heating and consecutive temperature changes can also be determined by a system controller 8a, 8b. That way, those delays can be determined for the entire site and/or for the entire building. In an embodiment with finer granularity, delays are determined by the system controller 8a, 8b per room and/or per space 4a - 4d and/or per cluster.

Direct measurements of thermal power

Dedicated sensors can be available at the site such that values of cooling power $\dot{Q}_{C,t}^{cool}$ and/or values of heating power $\dot{Q}_{C,t}^{heat}$ can be obtained directly. A sensor can, for example, provide signals indicative of supply and return temperatures and of volume flow. When a sensor for measurements of cooling power $\dot{Q}_{C,t}^{cool}$ and/or of heating power $\dot{Q}_{C,t}^{heat}$ becomes available, such values $\dot{Q}_{C,t}^{cool}$ and/or $\dot{Q}_{C,t}^{heat}$ no longer need to be estimated. Values of cooling power $\dot{Q}_{C,t}^{cool}$ and/or values of heating power $\dot{Q}_{C,t}^{heat}$ are then readily obtained from the signals of such sensors.

A European patent application EP3489591A1 filed on 18 October 2018 and claims a priority of an earlier application of 24 November 2017. The application was published on 29 May 2019. FIG 1 of EP3489591A1 illustrates sensors for measurements of cooling power and/or measurements of heating power.

Sensors for measurements of cooling power and/or measurements of heating power are occasionally referred to as heat meters and/or as flux calorimeters. A European patent EP3584555B1 discloses and claims a flux calorimeter. The patent EP3584555B1 was filed on 19 June 2018. EP3584555B1 was granted on 27 May 2020.

In an embodiment, a least one cluster of the site comprises a sensor that affords direct measurements of cooling power $\dot{Q}_{C,t}^{cool}$ and/or of heating power $\dot{Q}_{C,t}^{heat}$. It is also envisaged that all clusters of the site comprise a sensor that affords direct measurements of cooling power $\dot{Q}_{C,t}^{cool}$ and/or of heating power $\dot{Q}_{C,t}^{heat}$. Sensors for direct measurements of cooling power $\dot{Q}_{C,t}^{cool}$ and/or of heating power $\dot{Q}_{C,t}^{heat}$ can be available throughout the site. In this case, values $\dot{Q}_{C,t}^{cool}$ and/or $\dot{Q}_{C,t}^{heat}$ no longer need to be estimated at all. Instead, the thermal power balance can be established based on values directly obtained from such sensors for the entire site.

In another embodiment, a least one space 4a - 4d of the building comprises a sensor that affords direct measurements of cooling power and/or of heating power. It is also envisaged that all spaces 4a - 4d of the building comprise a sensor that affords direct measurements of cooling power and/or of heating power. Sensors for direct measurements of cooling power and/or of heating power can be available throughout the building. In this case, values of cooling power and/or values of heating power no longer need to be estimated at all. Instead, the thermal power balance can be established based on values directly obtained from such sensors for all spaces 4a - 4d.

In yet another embodiment, a least one room of the building comprises a sensor that affords direct measurements of cooling power and/or of heating power. It is also envisaged that all rooms of the building comprise a sensor that affords direct measurements of cooling power and/or of heating power. Sensors for direct measurements of cooling power and/or of heating power can be available throughout the building. In this case, values of cooling power and/or values of heating power no longer need to be estimated at all. Instead, the thermal power balance can be established based on values directly obtained from these sensors for all rooms.

Fault detection

According to an aspect, a cluster of a site can have a sensor for direct measurements of cooling power $\dot{Q}_{C,t}^{cool}$ and/or of heating power $\dot{Q}_{C,t}^{heat}$. If that sensor is complemented by a temperature sensor, correlations between the two sensors can be established. That way, faulted temperature sensors and/or faulted sensors for direct measurements of cooling power $\dot{Q}_{C,t}^{cool}$ and/or of heating power $\dot{Q}_{C,t}^{heat}$ can be identified. Also, measurements and/or values obtained from the signals of either type of sensor can be checked for plausibility. It is envisaged that all clusters have a temperature sensor as well as a sensor for direct measurements of cooling power $\dot{Q}_{C,t}^{cool}$ and/or of heating power $\dot{Q}_{C,t}^{heat}$. Identification of faulted sensors and/or plausibility checks are then available throughout the site.

According to another aspect, a space 4a - 4d of the site can have a sensor for direct measurements of cooling power and/or of heating power. If that sensor is complemented by a temperature sensor, correlations between the two sensors can be established. That way, faulted temperature sensors and/or faulted sensors for direct measurements of cooling power and/or of heating power can be identified. Also, measurements and/or values obtained from the signals of either type of sensor can be checked for plausibility. It is envisaged that all spaces 4a - 4d have a temperature sensor as well as a sensor for direct measurements of cooling power and/or of heating power. Identification of faulted sensors and/or plausibility checks are then available throughout the site.

According to still another aspect, a room of the building can have a sensor for direct measurements of cooling power and/or of heating power. If that sensor is complemented by a temperature sensor, correlations between the two sensors can be established. That way, faulted temperature sensors and/or faulted sensors for direct measurements of cooling power and/or of heating power can be identified. Also, measurements and/or values obtained from the signals of either type of sensor can be checked for plausibility. It is envisaged that all rooms have a temperature sensor as well as a sensor for direct measurements of cooling power and/or of heating power. Identification of faulted sensors and/or plausibility checks are then available throughout the building.

Control in the absence of precise valve positions

Positions of the valves 3a - 3g of the building or of the site need not always be available. More specifically, some positions of the valves 3a - 3g can be unavailable. The positions of valves 3a - 3g of refrigerant circuits of supermarkets can, by way of example, be unknown. More specifically, some positions of valves 3a - 3g of such a refrigerant circuit can be unknown.

Where valve positions are unavailable, demands for cooling $\dot{Q}_{C,t}^{demand\ for\ cooling}$ can be estimated based on comparisons between temperature values and set points indicative of temperature. The temperature values are preferably obtained from measured temperatures. Ideally, the temperature values are measured temperatures. The temperature values can also be effective temperatures of clusters as provided above. Demands for cooling $\dot{Q}_{C,t}^{demand\ for\ cooling}$ are also estimated based on a control mode or based on an assumed mode of control.

Likewise, demands for heat $\dot{Q}_{C,t}^{demand\ for\ heat}$ can be estimated based on comparisons between temperature values and set points indicative of temperature. The temperature values are preferably obtained from measured temperatures. Ideally, the temperature values are measured temperatures. The temperature values can also be effective temperatures of clusters as provided above. Demands for heat $\dot{Q}_{C,t}^{demand\ for\ hat}$ are also estimated based on a control mode or based on an assumed mode of control.

A first mode of operation assumes valves 3a - 3g with continuously or stepwise movable valve members. There is thus a plethora of valve positions between fully open and fully closed. A valve 3a - 3g is then gradually opened as a function of a difference between temperature values and set point temperatures. More specifically, the valve 3a - 3g is gradually opened as a function of a difference between measured temperature values and set point temperatures. The process of opening the valve 3a - 3g preferably continues until the valve 3a - 3g is in its fully open position.

A second mode of operation assumes valves 3a - 3g without continuously movable valve members. The valves 3a - 3g of a building or of a site can be selectively movable between fully closed and fully open. That is, the valves 3a - 3g are either fully closed or fully open. No permanent or stationary valve position exists between fully closed and fully open. Control of the valves 3a - 3g is then limited to on-off control. More specifically, the temperature controller 7 employs on-off control to set fully closed or fully open positions of the valves 3a - 3g. Refrigerant circuits of supermarkets can, by way of non-limiting example, involve on-off control.

If there exists a demand for cooling, a valve 3a - 3g will fully open as soon as a value of temperature is larger than an upper limit. More specifically, the valve 3a - 3g will fully open as soon as the measured value of temperature is larger than an upper limit. Likewise, the valve 3a - 3g will fully close as soon as the value of temperature or the effective temperature is less than a lower limit. More specifically, the valve 3a - 3g will fully close as soon as the measured value of temperature or the effective temperature is less than a lower limit.

The same can apply to all the valves 3a - 3g of a cluster of a site. The same can still apply to all the valves 3a - 3g of a space 4a - 4d of a site. The same can still apply to all the valves 3a - 3g of a room of a building.

If there exists a demand for heat, a valve 3a - 3g will fully close as soon as a value of temperature is larger than an upper limit. More specifically, the valve 3a - 3g will fully close as soon as the measured value of temperature or the effective temperature is larger than an upper limit. Likewise, the valve 3a - 3g will fully open as soon as the value of temperature is less than a lower limit. More specifically, the valve 3a - 3g will fully open as soon as the measured value of temperature or the effective temperature is less than a lower limit.

The same can apply to all the valves 3a - 3g of a cluster of a site. The same can still apply to all the valves 3a - 3g of a space 4a - 4d of a site. The same can still apply to all the valves 3a - 3g of a room of a building.

The aforementioned on-off mode of control can also applied to buildings and/or to sites where details of available control modes are unavailable or not readily available.

Reference measurements

Demands for cooling $\dot{Q}_{C,t}^{demand\ for\ cooling}$ can also be estimated based on reference measurements of thermal power over a predefined time period. Likewise, demands for heat $\dot{Q}_{C,t}^{demand\ for\ heat}$ can be estimated based on reference measurements of thermal power over a period of time. The period of time can, by way of non-limiting example, be four hours or twelve hours or twenty-four hours. Preferably, an operator and/or a user can set the period of time for power measurements in accordance with the requirements of the building and/or of the site. In a special embodiment, the period of time is a predetermined period of time.

Generally speaking, the period of time increases with the capacity of the thermal heat exchanger and/or with the capacity of the storage device for thermal energy. The thermal heat exchanger can, by way of non-limiting example, comprise one or more thermally activated building structures 6a - 6g. In a special embodiment, the thermal heat exchanger is a thermally activated building structure 6a - 6g. The period of time then increases with the capacity of the thermally activated building structure 6a - 6g. The period of time can also increase with the thermal mass of the thermally activated building structure 6a - 6g.

The system controller 8a, 8b controls thermal heat exchangers and/or a storage device based on such measurements of thermal power. That is, the system controller 8a, 8b causes supply of thermal power to the thermal heat exchangers and/or to the storage device in accordance with reference measurements of thermal power. In so doing, the system controller 8a, 8b factors in technical constraints of the thermal heat exchangers and/or of the storage device. The system controller 8a, 8b can also factor in technical constraints of a system for heating and/or ventilation and/or air-conditioning of the site. The system controller 8a, 8b can still factor in technical constraints of a system for heating and/or ventilation and/or air-conditioning of the building. The system controller 8a, 8b advantageously factors in technical constraints of the heat source 1a and/or technical constraints of the source of cooling 1b.

In an embodiment, the system controller 8a, 8b directly controls the thermal heat exchangers and/or the storage device. In an alternate embodiment, the system controller 8a, 8b employs a temperature controller 7 to control the thermal heat exchangers and/or the storage device.

More specifically, the system controller 8a, 8b controls one or more thermally activated building structures 6a - 6g. The system controller 8a, 8b causes supply of thermal power to the one or more thermally activated building structures 6a - 6g in accordance with reference measurements of thermal power. In so doing, the system controller 8a, 8b factors in technical constraints of the one or more thermally activated building structures 6a - 6g. The system controller 8a, 8b can also factor in technical constraints of a system for heating and/or ventilation and/or air-conditioning of the site. The system controller 8a, 8b can still factor in technical constraints of a system for heating and/or ventilation and/or air-conditioning of the building. The system controller 8a, 8b advantageously factors in technical constraints of the heat source 1a and/or technical constraints of the source of cooling 1b.

In an embodiment, the system controller 8a, 8b directly controls the one or more thermally activated building structures 6a - 6g. In an alternate embodiment, the system controller 8a, 8b employs a temperature controller 7 to control the one or more thermally activated building structures 6a - 6g.

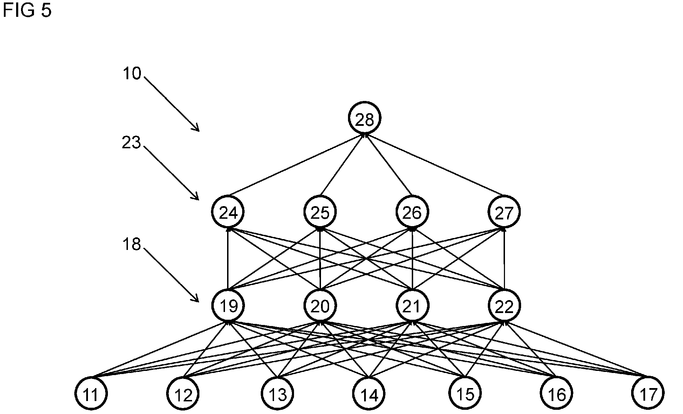

In an embodiment, the system controller 8a, 8b implements a neural network such as the network 11 shown in FIG 5. The neural network 10 comprises a plurality of input neurons 11-17 associated with

- thermal capacitances C of the spaces 4a - 4d of the site;

- a demands for cooling $\dot{Q}_t^{demand\ for\ cooling}$ and/or demands for heat $\dot{Q}_t^{demand\ for\ heat}$ of the spaces 4a - 4d of the site;
- cooling powers $\dot{Q}_t^{cool}$ and/or heating powers $\dot{Q}_t^{heat}$ for the spaces 4a - 4d of the site;
- temperature differences between consecutively recorded temperatures,
- etc.

It is envisaged that the neural network 10 comprises additional input neurons for historical values of

- thermal capacitances C of the spaces 4a - 4d of the site;
- a demands for cooling $\dot{Q}_t^{demand\ for\ cooling}$ and/or demands for heat $\dot{Q}_t^{demand\ for\ heat}$ of the spaces 4a - 4d of the site;
- cooling powers $\dot{Q}_t^{cool}$ and/or heating powers $\dot{Q}_t^{heat}$ for the spaces 4a - 4d of the site;
- temperature differences between consecutively recorded temperatures,
- etc.

Any input to the neural network 10 is ideally normalized. The neural network 10 also comprises an output neuron 28 indicative of a cooling power $\dot{Q}_t^{cool}$ and/or a heating power $\dot{Q}_t^{heat}$ associated with a thermally activated building structure 6a - 6g. According to an aspect, a value produced by output neuron is a set point for a thermally activated building structure 6a - 6g.

The neural network 10 also comprises several hidden layers 18, 23, each layer 18, 23 having a number of hidden neurons 19 - 22, 24 - 27. In an embodiment, the neural network 10 comprises a single layer of hidden neurons. In another embodiment, the neural network 10 comprises two layers 18, 23 of hidden neurons. The neurons can, by way of non-limiting example, have sigmoid and/or hyperbolic tangent and/or stepwise activation and/or rectified exponential linear unit functions. The neurons 19 - 22, 24 - 28 are advantageously biased. The neural network 10 is ideally trained under test conditions. A series of measurements obtained under various test conditions is employed to train the network 10.

The neural network 10 can, by way of example, be trained by a supervised training algorithm such as backpropagation. It is also envisaged that the neural network 10 is trained using an evolutionary algorithm such as a genetic algorithm. The skilled artisan can combine training algorithms. A genetic algorithm can, by way of example, be employed to find a coarse estimate of the weights of the connections of the neural network 10. A backpropagation algorithm is then employed to further improve on the performance of the neural network 10.

After training the configuration of the neural network 10 and/or the weights of the connections of the neural network 10 are saved in a memory of or associated with the system controller 8a, 8b. The configuration of the neural network 10 and/or the weights of the connections of the neural network 10 then define how to control at least one of the thermally activated building structures 6a - 6g.

As described in detail herein, the present disclosure teaches a method of controlling a site having a plurality of spaces (4a - 4d), at least one first space (4a - 4d) of the plurality of spaces (4a - 4d) having at least one thermal energy exchanger (6a - 6g), the at least one thermal energy exchanger (6a - 6g) having a predetermined thermal discharge characteristic, the method comprising the steps of:

   acquiring a first time series of signals indicative of a comfort parameter in the at least one first space (4a - 4d) of the site;
   acquiring a second time series of signals indicative of the comfort parameter in at least one second space (4a - 4d) of the site;
   producing a first time series of measured values indicative of the comfort parameter from the first time series of signals;
   producing a second time series of measured values indicative of the comfort parameter from the second time series of signals;
   determining a first temperature difference of the at least one first space (4a - 4d) from the first time series of measured values and determining a second temperature difference of the at least one second space (4a - 4d) from the second time series of measured values;
   producing a thermal power balance of the site, the thermal power balance involving:

   - a value of a thermal capacitance C of the at least one first space (4a - 4d) of the site;
   - a value of a thermal capacitance C of the at least one second space (4a - 4d) of the site;

- a demand for cooling $\dot{Q}_t^{demand\ for\ cooling}$ and/or a demand for heat $\dot{Q}_t^{demand\ for\ heat}$ of the at least one first space (4a - 4d) of the site;
- a demand for cooling $\dot{Q}_t^{demand\ for\ cooling}$ and/or a demand for heat $\dot{Q}_t^{demand\ for\ heat}$ of the at least one second space (4a - 4d) of the site;
- a cooling power $\dot{Q}_t^{cool}$ and/or a heating power $\dot{Q}_t^{heat}$ for the at least one first space (4a - 4d) of the site;
- a cooling power $\dot{Q}_t^{cool}$ and/or a heating power $\dot{Q}_t^{heat}$ for the at least one second space (4a - 4d) of the site;
- the first temperature difference and the second temperature difference;

using the thermal power balance to determine the cooling power $\dot{Q}_t^{cool}$ and/or the heating power $\dot{Q}_t^{heat}$ for the at least one first space (4a - 4d); and

charging the at least one thermal energy exchanger (6a - 6g) with thermal energy as a function of the cooling power $\dot{Q}_t^{cool}$ determined for the at least one first space (4a - 4d) and/or as a function of the heating power $\dot{Q}_t^{heat}$ determined for the at least one first space (4a - 4d).

In an embodiment, the method of controlling a site having a plurality of spaces (4a - 4d) is a method of controlling a comfort parameter at a site having a plurality of spaces (4a - 4d). It is also envisaged that the method of controlling a site having a plurality of spaces (4a - 4d) is a method of controlling at least one thermal energy exchanger (1) of a site having a plurality of spaces (4a - 4d).

In an embodiment, the at least one second space does not have at least one thermal energy exchanger (6a - 6g), the at least one thermal energy exchanger (6a - 6g) having a predetermined thermal discharge characteristic. That is, the at least one second space has at least one heat exchanger having a variable thermal discharge characteristic. The thermal discharge characteristic can, by way of example, vary because of a fan mounted to the heat exchanger. The fan advantageously is a variable speed fan. The fan can also be an on/off fan and the duty cycle of the on/off fan is controlled in accordance with varying thermal requirements. The system controller (8a, 8b) thus operates a site having heterogeneous heat exchangers.

In an alternate embodiment, the at least one second space also has at least one thermal energy exchanger (6a - 6g), the at least one thermal energy exchanger (6a - 6g) having a predetermined thermal discharge characteristic. The system controller (8a, 8b) thus operates a site having homogeneous heat exchangers.

The instant disclosure further teaches any of the aforementioned methods, the method comprising the steps of:

acquiring the first time series of signals indicative of the comfort parameter from a first sensor (5a - 5d) associated with the at least one first space (4a - 4d) of the site; and
acquiring the second time series of signals indicative of the comfort parameter from a second sensor (5a - 5d) associated with the at least one second space (4a - 4d) of the site.

The present disclosure further teaches any of the aforementioned methods, the method comprising the steps of:

acquiring the first time series of signals indicative of the comfort parameter from a first sensor (5a - 5d) in the at least one first space (4a - 4d) of the site; and
acquiring the second time series of signals indicative of the comfort parameter from a second sensor (5a - 5d) in the at least one second space (4a - 4d) of the site.

The first sensor (5a - 5d) is preferably different from the second sensor (5a - 5d).

The present disclosure also teaches any of the aforementioned methods, the method comprising the steps of:

recording the first time series of signals indicative of the comfort parameter in the at least one first space (4a - 4d) of the site; and
recording the second time series of signals indicative of the comfort parameter in the at least one second space (4a - 4d) of the site.

The at least one first space (4a - 4d) is advantageously different from the at least one second space (4a - 4d).

The comfort parameter ideally is a temperature, especially a room temperature. The first sensor (5a - 5d) preferably comprises a first temperature sensor (5a - 5d). The first sensor (5a - 5d) ideally is a first temperature sensor (5a - 5d). The second sensor (5a - 5d) preferably comprises a second temperature sensor (5a - 5d). The second sensor (5a - 5d) ideally is a second temperature sensor (5a - 5d).

The present disclosure also deals with any of the aforementioned methods, the method comprising the step of: determining a first temperature difference of the at least one first space (4a - 4d) exclusively from the first time series of measured values and determining a second temperature difference of the at least one second space (4a - 4d) exclusively from the second time series of measured values.

The instant disclosure still teaches any of the aforementioned methods, the method comprising the step of: calculating the first temperature difference of the at least one first space (4a - 4d) from the first time series of measured values and calculating the second temperature difference of the at least one second space (4a - 4d) from the second time series of measured values.

The present disclosure yet further teaches any of the aforementioned methods, the method comprising the steps of:

calculating the first temperature difference of the at least one first space (4a - 4d) from the first time series of measured values as a difference between two consecutively measured values of the first time series of measured values; and

calculating the second temperature difference of the at least one second space (4a - 4d) from the second time series of measured values as a difference between two consecutively measured values of the second time series of measured values.

The thermal power balance preferably comprises a system of mathematical relationships. The thermal power balance ideally is a system of mathematical relationships.

The thermal power balance preferably comprises a system of equations. The thermal power balance ideally is a system of equations.

The present disclosure also deals with any of the aforementioned methods, the method comprising the step of: setting up a thermal power balance of the site, the thermal power balance involving:

- a value of a thermal capacitance C of the at least one first space (4a - 4d) of the site;
- a value of a thermal capacitance C of the at least one second space (4a - 4d) of the site;
- a demand for cooling $\dot{Q}_t^{demand\ for\ cooling}$ and/or a demand for heat $\dot{Q}_t^{demand\ for\ heat}$ of the at least one first space (4a - 4d) of the site;
- a demand for cooling $\dot{Q}_t^{demand\ for\ cooling}$ and/or a demand for heat $\dot{Q}_t^{demand\ for\ heat}$ of the at least one second space (4a - 4d) of the site;
- a cooling power $\dot{Q}_t^{cool}$ and/or a heating power $\dot{Q}_t^{heat}$ for the at least one first space (4a - 4d) of the site;
- a cooling power $\dot{Q}_t^{cool}$ and/or a heating power $\dot{Q}_t^{heat}$ for the at least one second space (4a - 4d) of the site; and
- the first temperature difference and the second temperature difference.

The present disclosure further deals with any of the aforementioned methods, the method comprising the step of: establishing a thermal power balance of the site, the thermal power balance involving:

- a value of a thermal capacitance $C$ of the at least one first space (4a - 4d) of the site;
- a value of a thermal capacitance $C$ of the at least one second space (4a - 4d) of the site;
- a demand for cooling $\dot{Q}_t^{demand\ for\ cooling}$ and/or a demand for heat $\dot{Q}_t^{demand\ for\ heat}$ of the at least one first space (4a - 4d) of the site;
- a demand for cooling $\dot{Q}_t^{demand\ for\ cooling}$ and/or a demand for heat $\dot{Q}_t^{demand\ for\ heat}$ of the at least one second space (4a - 4d) of the site;
- a cooling power $\dot{Q}_t^{cool}$ and/or a heating power $\dot{Q}_t^{heat}$ for the at least one first space (4a - 4d) of the site;
- a cooling power $\dot{Q}_t^{cool}$ and/or a heating power $\dot{Q}_t^{heat}$ for the at least one second space (4a - 4d) of the site; and
- the first temperature difference and the second temperature difference.

The present disclosure also teaches any of the aforementioned methods, the method comprising the step of: determining a thermal power balance of the site, the thermal power balance involving:

- a value of a thermal capacitance $C$ of the at least one first space (4a - 4d) of the site;
- a value of a thermal capacitance $C$ of the at least one second space (4a - 4d) of the site;
- a demand for cooling $\dot{Q}_t^{demand\ for\ cooling}$ and/or a demand for heat $\dot{Q}_t^{demand\ for\ heat}$ of the at least one first space (4a - 4d) of the site;
- a demand for cooling $\dot{Q}_t^{demand\ for\ cooling}$ and/or a demand for heat $\dot{Q}_t^{demand\ for\ heat}$ of the at least one second space (4a - 4d) of the site;
- a cooling power $\dot{Q}_t^{cool}$ and/or a heating power $\dot{Q}_t^{heat}$ for the at least one first space (4a - 4d) of the site;
- a cooling power $\dot{Q}_t^{cool}$ and/or a heating power $\dot{Q}_t^{heat}$ for the at least one second space (4a - 4d) of the site; and
- the first temperature difference and the second temperature difference.

The instant disclosure still teaches any of the aforementioned methods, the method comprising the step of: calculating the thermal power balance of the site, the thermal power balance involving:

- the value of the thermal capacitance $C$ of the at least one first space (4a - 4d) of the site;
- the value of the thermal capacitance $C$ of the at least one second space (4a - 4d) of the site;
- the demand for cooling $\dot{Q}_t^{demand\ for\ cooling}$ and/or the demand for heat $\dot{Q}_t^{demand\ for\ heat}$ of the at least one first space (4a - 4d) of the site;
- the demand for cooling $\dot{Q}_t^{demand\ for\ cooling}$ and/or the demand for heat $\dot{Q}_t^{demand\ for\ heat}$ of the at least one second space (4a - 4d) of the site;
- the cooling power $\dot{Q}_t^{cool}$ and/or the heating power $\dot{Q}_t^{heat}$ for the at least one first space (4a - 4d) of the site;
- the cooling power $\dot{Q}_t^{cool}$ and/or the heating power $\dot{Q}_t^{heat}$ for the at least one second space (4a - 4d) of the site; and
- the first temperature difference and the second temperature difference.

The present disclosure further teaches any of the aforementioned methods, the method comprising the step of: determining the thermal power balance of the site, the thermal power balance comprising:

- the value of the thermal capacitance $C$ of the at least one first space (4a - 4d) of the site;
- the value of the thermal capacitance $C$ of the at least one second space (4a - 4d) of the site;
- the demand for cooling $\dot{Q}_t^{demand\ for\ cooling}$ and/or the demand for heat $\dot{Q}_t^{demand\ for\ heat}$ of the at least one first space (4a - 4d) of the site;
- the demand for cooling $\dot{Q}_t^{demand\ for\ cooling}$ and/or the demand for heat $\dot{Q}_t^{demand\ for\ heat}$ of the at least one second space (4a - 4d) of the site;
- the cooling power $\dot{Q}_t^{cool}$ and/or the heating power $\dot{Q}_t^{heat}$ for the at least one first space (4a - 4d) of the site;
- the cooling power $\dot{Q}_t^{cool}$ and/or the heating power $\dot{Q}_t^{heat}$ for the at least one second space (4a - 4d) of the site; and
- the first temperature difference and the second temperature difference.

The present disclosure still further teaches any of the aforementioned methods, the method comprising the step of:
calculating the thermal power balance of the site, the thermal power balance comprising:

- the value of the thermal capacitance $C$ of the at least one first space (4a - 4d) of the site;
- the value of the thermal capacitance $C$ of the at least one second space (4a - 4d) of the site;
- the demand for cooling $\dot{Q}_t^{demand\ for\ cooling}$ and/or the demand for heat $\dot{Q}_t^{demand\ for\ heat}$ of the at least one first space (4a - 4d) of the site;
- the demand for cooling $\dot{Q}_t^{demand\ for\ cooling}$ and/or the demand for heat $\dot{Q}_t^{demand\ for\ heat}$ of the at least one second space (4a - 4d) of the site;
- the cooling power $\dot{Q}_t^{cool}$ and/or the heating power $\dot{Q}_t^{heat}$ for the at least one first space (4a - 4d) of the site;

- the cooling power $\dot{Q}_t^{cool}$ and/or the heating power $\dot{Q}_t^{heat}$ for the at least one second space (4a - 4d) of the site; and
- the first temperature difference and the second temperature difference.

The instant disclosure also teaches any of the aforementioned methods, the method comprising the step of:

using the thermal power balance to calculate the cooling power $\dot{Q}_t^{cool}$ and/or the heating power $\dot{Q}_t^{heat}$ for the at least one first space (4a - 4d).

The present disclosure further teaches any of the aforementioned methods, the method comprising the step of:

solving the thermal power balance to determine the cooling power $\dot{Q}_t^{cool}$ and/or the heating power $\dot{Q}_t^{heat}$ for the at least one first space (4a - 4d).

The instant disclosure still further teaches any of the aforementioned methods, the method comprising the step of:

solving the thermal power balance to calculate the cooling power $\dot{Q}_t^{cool}$ and/or the heating power $\dot{Q}_t^{heat}$ for the at least one first space (4a - 4d).

The present disclosure also teaches any of the aforementioned methods, the method comprising the step of:

using the system of mathematical relationships to calculate the cooling power $\dot{Q}_t^{cool}$ and/or the heating power $\dot{Q}_t^{heat}$ for the at least one first space (4a - 4d).

The instant disclosure further teaches any of the aforementioned methods, the method comprising the step of:

solving the system of mathematical relationships to determine the cooling power $\dot{Q}_t^{cool}$ and/or the heating power $\dot{Q}_t^{heat}$ for the at least one first space (4a - 4d).

The present disclosure still further teaches any of the aforementioned methods, the method comprising the steps of:

solving the system of mathematical relationships to calculate the cooling power $\dot{Q}_t^{cool}$ and/or the heating power $\dot{Q}_t^{heat}$ for the at least one first space (4a - 4d); and
charging the at least one thermal energy exchanger (6a - 6g) with thermal energy as a function of the cooling power $\dot{Q}_t^{cool}$ calculated for the at least one first space (4a - 4d) and/or as a function of the heating power $\dot{Q}_t^{heat}$ calculated for the at least one first space (4a - 4d).

The instant disclosure also teaches any of the aforementioned methods, the method comprising the steps of:

using the system of equations to calculate the cooling power $\dot{Q}_t^{cool}$ and/or the heating power $\dot{Q}_t^{heat}$ for the at least one first space (4a - 4d); and
charging the at least one thermal energy exchanger (6a - 6g) with thermal energy as a function of the cooling power $\dot{Q}_t^{cool}$ calculated for the at least one first space (4a - 4d) and/or as a function of the heating power $\dot{Q}_t^{heat}$ calculated for the at least one first space (4a -4d).

The present disclosure further teaches any of the aforementioned methods, the method comprising the step of:

solving the system of equations to determine the cooling power $\dot{Q}_t^{cool}$ and/or the heating power $\dot{Q}_t^{heat}$ for the at least one first space (4a - 4d).

The instant disclosure still further teaches any of the aforementioned methods, the method comprising the steps of:

solving the system of equations to calculate the cooling power $\dot{Q}_t^{cool}$ and/or the heating power $\dot{Q}_t^{heat}$ for the at least one first space (4a - 4d); and
charging the at least one thermal energy exchanger (6a - 6g) with thermal energy as a function of the cooling power $\dot{Q}_t^{cool}$ calculated for the at least one first space (4a - 4d) and/or as a function of the heating power $\dot{Q}_t^{heat}$ calculated for the at least one first space (4a - 4d).

By charging the at least one thermal energy exchanger (6a - 6g) with thermal energy as a function of the cooling power $\dot{Q}_t^{cool}$ calculated for the at least one first space (4a - 4d), a flow of a coolant medium into the at least one thermal energy exchanger (6a - 6d) is produced as a function of the cooling power $\dot{Q}_t^{cool}$ calculated for the at least one first space (4a - 4d). More specifically, a flow of a coolant medium into a conduit of the at least one thermal energy exchanger (6a - 6d) is produced as a function of the cooling power $\dot{Q}_t^{cool}$ calculated for the at least one first space (4a - 4d).

By charging the at least one thermal energy exchanger (6a - 6g) with thermal energy as a function of the cooling power $\dot{Q}_t^{cool}$ determined for the at least one first space (4a - 4d), a flow of a coolant medium into the at least one thermal energy exchanger (6a - 6d) is produced as a function of the cooling power $\dot{Q}_t^{cool}$ determined for the at least one first space (4a - 4d). More specifically, a flow of a coolant medium into a conduit of the at least one thermal energy exchanger (6a - 6d) is produced as a function of the cooling power $\dot{Q}_t^{cool}$ determined for the at least one first space (4a - 4d).

By charging the at least one thermal energy exchanger (6a - 6g) with thermal energy as a function of the heating power $\dot{Q}_t^{heat}$ calculated for the at least one first space (4a - 4d), a flow of a heating medium into the at least one thermal energy exchanger (6a - 6d) is produced as a function of the heating power $\dot{Q}_t^{heat}$ calculated for the at least one first space (4a - 4d). More specifically, a flow of a heating medium into a conduit of the at least one thermal energy exchanger (6a - 6d) is produced as a function of the heating power $\dot{Q}_t^{heat}$ calculated for the at least one first space (4a - 4d).

By charging the at least one thermal energy exchanger (6a - 6g) with thermal energy as a function of the heating power $\dot{Q}_t^{heat}$ determined for the at least one first space (4a - 4d), a flow of a heating medium into the at least one thermal energy exchanger (6a - 6d) is produced as a function of the heating power $\dot{Q}_t^{heat}$ determined for the at least one first space (4a - 4d). More specifically, a flow of a heating medium into a conduit of the at least one thermal energy exchanger (6a - 6d) is produced as a function of the heating power $\dot{Q}_t^{heat}$ determined for the at least one first space (4a - 4d).

The present disclosure also teaches any of the aforementioned methods, wherein at least one of the first time series of signals and the second time series of signals comprises a time stamp for each signal, the method comprising the steps of:

determining a time difference between two consecutive time stamps of the at least one time series of signals; and
determining the thermal power balance of the site, the thermal power balance additionally involving:

- the determined time difference.

The instant disclosure also teaches any of the aforementioned methods involving the at least one time series of signals comprising the time stamp for each signal, the method comprising the steps of:

calculating the time difference between two consecutive time stamps of the at least one time series of signals; and
calculating the thermal power balance of the site, the thermal power balance additionally comprising:

- the calculated time difference.

The present disclosure further teaches any of the aforementioned methods involving the at least one time series of signals comprising the time stamp for each signal, the method comprising the steps of:

calculating the time difference between two consecutive time stamps of the at least one time series of signals; and
determining the thermal power balance of the site, the thermal power balance additionally comprising:

- the calculated time difference.

The instant disclosure still further teaches any of the aforementioned methods involving the at least one time series of signals comprising the time stamp for each signal, the method comprising the steps of:

determining the time difference between two consecutive time stamps of the at least one time series of signals; and
determining the thermal power balance of the site, the thermal power balance additionally comprising:

- the determined time difference.

The present disclosure still further teaches any of the aforementioned methods involving the at least one time series of signals comprising the time stamp for each signal, the method comprising the steps of:

determining the time difference between two consecutive time stamps of the at least one time series of signals; and
calculating the thermal power balance of the site, the thermal power balance additionally comprising:

- the determined time difference.

The instant disclosure also teaches any of the aforementioned methods involving the at least one time series of signals comprising the time stamp for each signal, the method comprising the steps of:

calculating the time difference between two consecutive time stamps of the at least one time series of signals; and
calculating the thermal power balance of the site, the thermal power balance additionally involving:

- the calculated time difference.

The present disclosure further teaches any of the aforementioned methods involving the at least one time series of signals comprising the time stamp for each signal, the method comprising the steps of:

calculating the time difference between two consecutive time stamps of the at least one time series of signals; and
determining the thermal power balance of the site, the thermal power balance additionally involving:

- the calculated time difference.

The instant disclosure still further teaches any of the aforementioned methods involving the at least one time series of signals comprising the time stamp for each signal, the method comprising the steps of:

determining the time difference between two consecutive time stamps of the at least one time series of signals; and
calculating the thermal power balance of the site, the thermal power balance additionally involving:

- the determined time difference.

The present disclosure also teaches any of the aforementioned methods, the method comprising the steps of:

comparing at least one measured value of the first time series of measured values to a lower limit value;
if the at least one measured value of the first time series of measured values is less than the lower limit value:

determining a lower limit deviation as a difference between the at least one measured value of the first time series of measured values and the lower limit value; and
charging the at least one thermal energy exchanger (6a - 6d) with thermal energy exclusively as a function of the lower limit deviation.

The instant disclosure also teaches any of the aforementioned methods involving the lower limit deviation, the method comprising the step of:
calculating the lower limit deviation as a difference between the at least one measured value of the first time series of measured values and the lower limit value.
By charging the at least one thermal energy exchanger (6a - 6d) with thermal energy exclusively as a function of the lower limit deviation, a flow of a heated medium into the at least one thermal energy exchanger (6a - 6d) is produced exclusively as a function of the lower limit deviation. More specifically, a flow of a heated medium into a conduit of the at least one thermal energy exchanger (6a - 6d) is produced exclusively as a function of the lower limit deviation.
In an embodiment, the lower limit value is a predetermined lower limit value.
The present disclosure also teaches any of the aforementioned methods, the method comprising the steps of:

comparing at least one measured value of the first time series of measured values to an upper limit value;
if the at least one measured value of the first time series of measured values is greater than the upper limit value:

determining an upper limit deviation as a difference between the at least one measured value of the first time series of measured values and the upper limit value; and
charging the at least one thermal energy exchanger (6a - 6d) with thermal energy exclusively as a function of the upper limit deviation.

The instant disclosure also teaches any of the aforementioned methods involving the upper limit deviation, the method comprising the step of:
calculating the upper limit deviation as a difference between the at least one measured value of the first time series of measured values and the upper limit value.

By charging the at least one thermal energy exchanger (6a - 6d) with thermal energy exclusively as a function of the upper limit deviation, a flow of a coolant medium into the at least one thermal energy exchanger (6a - 6d) is produced exclusively as a function of the upper limit deviation. More specifically, a flow of a coolant medium into a conduit of the at least one thermal energy exchanger (6a - 6d) is produced exclusively as a function of the upper limit deviation.

In an embodiment, the upper limit value is a predetermined upper limit value.

The present disclosure also teaches any of the aforementioned methods, the method comprising the steps of:

acquiring a plurality of time series of signals indicative of the comfort parameter, each time series being associated with the comfort parameter in a space (4a - 4d) of the plurality of spaces (4a - 4d) of the site;
producing a plurality of time series of measured values from the plurality of time series of signals;
using the plurality of time series of measured values to determine a temperature difference of each space (4a - 4d);
determining the thermal power balance of the site, the thermal power balance involving:

- a value of a thermal capacitance C of each space (4a - 4d) of the site;
- a demand for cooling $\dot{Q}_t^{demand\ for\ cooling}$ and/or a demand for heat $\dot{Q}_t^{demand\ for\ heat}$ of each space of the site;
- a cooling power $\dot{Q}_t^{cool}$ and/or a heating power $\dot{Q}_t^{heat}$ for each space (4a - 4d) of the site;
- a temperature difference of each space (4a - 4d) of the site; and
- the predetermined thermal discharge characteristic of the at least one thermal energy exchanger (6a - 6d).

The thermal power balance preferably comprises a system of mathematical relationships. The thermal power balance ideally is a system of mathematical relationships.

The thermal power balance preferably comprises a system of equations. The thermal power balance ideally is a system of equations.

The instant disclosure also teaches any of the aforementioned methods involving the value of the thermal capacitance C of each space (4a - 4d) of the site, the method comprising the step of:
calculating the thermal power balance of the site, the thermal power balance involving:

- the value of the thermal capacitance C of each space (4a - 4d) of the site;
- the demand for cooling $\dot{Q}_t^{demand\ for\ cooling}$ and/or the demand for heat $\dot{Q}_t^{demand\ for\ heat}$ of each space of the site;
- the cooling power $\dot{Q}_t^{cool}$ and/or the heating power $\dot{Q}_t^{heat}$ for each space (4a - 4d) of the site;
- the temperature difference of each space (4a - 4d) of the site; and
- the predetermined thermal discharge characteristic of the at least one thermal energy exchanger (6a - 6d).

The present disclosure further teaches any of the aforementioned methods involving the value of the thermal capacitance C of each space (4a - 4d) of the site, the method comprising the step of:
determining the thermal power balance of the site, the thermal power balance comprising:

- the value of the thermal capacitance C of each space (4a - 4d) of the site;

- the demand for cooling $\dot{Q}_t^{demand\ for\ cooling}$ and/or the demand for heat $\dot{Q}_t^{demand\ for\ heat}$ of each space of the site;
- the cooling power $\dot{Q}_t^{cool}$ and/or the heating power $\dot{Q}_t^{heat}$ for each space (4a - 4d) of the site;
- the temperature difference of each space (4a - 4d) of the site; and
- the predetermined thermal discharge characteristic of the at least one thermal energy exchanger (6a - 6d).

The instant disclosure further teaches any of the aforementioned methods involving the value of the thermal capacitance $C$ of each space (4a - 4d) of the site, the method comprising the step of:
calculating the thermal power balance of the site, the thermal power balance involving:

- the value of the thermal capacitance $C$ of each space (4a - 4d) of the site;
- the demand for cooling $\dot{Q}_t^{demand\ for\ cooling}$ and/or the demand for heat $\dot{Q}_t^{demand\ for\ heat}$ of each space of the site;
- the cooling power $\dot{Q}_t^{cool}$ and/or the heating power $\dot{Q}_t^{heat}$ for each space (4a - 4d) of the site;
- the temperature difference of each space (4a - 4d) of the site; and
- the predetermined thermal discharge characteristic of the at least one thermal energy exchanger (6a - 6d).

The present disclosure also teaches any of the aforementioned methods involving the plurality of time series of signals indicative of the comfort parameter, wherein at least one time series of the plurality of time series comprises a time stamp for each signal, the method comprising the steps of:

determining a time difference between two consecutive time stamps of the at least one time series of signals; and
determining the thermal power balance of the site, the thermal power balance additionally involving:

- the determined time difference.

The present disclosure also teaches any of the aforementioned methods involving the plurality of time series of signals indicative of the comfort parameter, wherein at least one time series of the plurality of time series comprises a time stamp for each signal, the method involving the steps of:

calculating the time difference between two consecutive time stamps of the at least one time series of signals; and
calculating the thermal power balance of the site, the thermal power balance additionally involving:

- the calculated time difference.

The instant disclosure further teaches any of the aforementioned methods involving the plurality of time series of signals indicative of the comfort parameter, wherein at least one time series of the plurality of time series comprises a time stamp for each signal, the method involving the steps of:

calculating the time difference between two consecutive time stamps of the at least one time series of signals; and
calculating the thermal power balance of the site, the thermal power balance additionally comprising:

- the calculated time difference.

The present disclosure still further teaches any of the aforementioned methods involving the plurality of time series of signals indicative of the comfort parameter, wherein at least one time series of the plurality of time series comprises a time stamp for each signal, the method comprising the steps of:

determining the time difference between two consecutive time stamps of the at least one time series of signals; and
determining the thermal power balance of the site, the thermal power balance additionally comprising:

- the determined time difference.

The present disclosure also teaches any of the aforementioned methods, the method comprising the steps of:

forming at least one first cluster comprising the at least one first space (4a - 4d) and the at least one second space (4a - 4d);
forming at least one second cluster comprising at least one third space (4a - 4d) of the plurality of spaces (4a - 4d) and at least one fourth space (4a - 4d) of the plurality of spaces (4a - 4d);
acquiring a third time series of signals indicative of the comfort parameter in the at least one first cluster;
acquiring a fourth time series of signals indicative of the comfort parameter in the at least one second cluster;
producing a third time series of measured values indicative of the comfort parameter from the third time series of signals;
producing a fourth time series of measured values indicative of the comfort parameter from the fourth time series of signals;
determining a third temperature difference of the at least one first cluster from the third time series of measured values and determining a fourth temperature difference of the at least one second cluster from the fourth time series of measured values;
determining the thermal power balance of the site, the thermal power balance involving:

- a value of a thermal capacitance $C_c$ of the at least one first cluster;
- a value of a thermal capacitance $C_c$ of the at least one second cluster;
- a demand for cooling $\dot{Q}_{C,t}^{demand\ for\ cooling}$ and/or a demand for heat $\dot{Q}_{C,t}^{demand\ for\ heat}$ of the at least one first cluster;
- a demand for cooling $\dot{Q}_{C,t}^{demand\ for\ cooling}$ and/or a demand for heat $\dot{Q}_{C,t}^{demand\ for\ heat}$ of the at least one second cluster;
- a cooling power $\dot{Q}_{C,t}^{cool}$ and/or a heating power $\dot{Q}_{C,t}^{heat}$ for the at least one first cluster;
- a cooling power $\dot{Q}_{C,t}^{cool}$ and/or a heating power $\dot{Q}_{C,t}^{heat}$ for the at least one second cluster;
- the third temperature difference and the fourth temperature difference;
- the predetermined thermal discharge characteristic of the at least one thermal energy exchanger (6a - 6d);

using the thermal power balance to determine the cooling power $\dot{Q}_{C,t}^{cool}$ and/or the heating power $\dot{Q}_{C,t}^{heat}$ for the at least one first cluster; and
charging the at least one thermal energy exchanger (6a - 6g) with thermal energy as a function of the cooling power $\dot{Q}_{C,t}^{cool}$ determined for the at least one first cluster and/or as a function of the heating power $\dot{Q}_{C,t}^{heat}$ determined for the at least one second cluster.

The instant disclosure also teaches a method of controlling a site having a plurality of spaces (4a - 4d), at least one first space (4a - 4d) of the plurality of spaces (4a - 4d) having at least one thermal energy exchanger (6a - 6g), the at least one thermal energy exchanger (6a - 6g) having a predetermined thermal discharge characteristic, the method comprising the steps of:

forming at least one first cluster comprising the at least one first space (4a - 4d) and the at least one second space (4a - 4d);
forming at least one second cluster comprising at least one third space (4a - 4d) of the plurality of spaces (4a - 4d) and at least one fourth space (4a - 4d) of the plurality of spaces (4a - 4d);
acquiring a third time series of signals indicative of the comfort parameter in the at least one first cluster;
acquiring a fourth time series of signals indicative of the comfort parameter in the at least one second cluster;
producing a third time series of measured values indicative of the comfort parameter from the third time series of signals;
producing a fourth time series of measured values indicative of the comfort parameter from the fourth time series of signals;
determining a third temperature difference of the at least one first cluster from the third time series of measured values and determining a fourth temperature difference of the at least one second cluster from the fourth time series of measured values;
determining the thermal power balance of the site, the thermal power balance involving:

- a value of a thermal capacitance $C_c$ of the at least one first cluster;
- a value of a thermal capacitance $C_c$ of the at least one second cluster;
- a demand for cooling $\dot{Q}_{C,t}^{demand\ for\ cooling}$ and/or a demand for heat $\dot{Q}_{C,t}^{demand\ for\ heat}$ of the at least one first cluster;
- a demand for cooling $\dot{Q}_{C,t}^{demand\ for\ cooling}$ and/or a demand for heat $\dot{Q}_{C,t}^{demand\ for\ heat}$ of the at least one second cluster;
- a cooling power $\dot{Q}_{C,t}^{cool}$ and/or a heating power $\dot{Q}_{C,t}^{heat}$ for the at least one first cluster;
- a cooling power $\dot{Q}_{C,t}^{cool}$ and/or a heating power $\dot{Q}_{C,t}^{heat}$ for the at least one second cluster;
- the third temperature difference and the fourth temperature difference;
- the predetermined thermal discharge characteristic of the at least one thermal energy exchanger (6a - 6d);

using the thermal power balance to determine the cooling power $\dot{Q}_{C,t}^{cool}$ and/or the heating power $\dot{Q}_{C,t}^{heat}$ for the at least one first cluster; and

charging the at least one thermal energy exchanger (6a - 6g) with thermal energy as a function of the cooling power $\dot{Q}_{C,t}^{cool}$ determined for the at least one first cluster and/or as a function of the heating power $\dot{Q}_{C,t}^{heat}$ determined for the at least one second cluster.

The instant disclosure also teaches any of the aforementioned methods involving the at least one first cluster, the method comprising the steps of:

acquiring the third time series of signals indicative of the comfort parameter from a third sensor (5a - 5d) associated with the at least one first cluster; and
acquiring the fourth time series of signals indicative of the comfort parameter from a fourth sensor (5a - 5d) associated with the at least one second cluster.

The present disclosure further teaches any of the aforementioned methods involving the at least one first cluster, the method comprising the steps of:

acquiring the third time series of signals indicative of the comfort parameter from a third sensor (5a - 5d) in the at least one first cluster; and
acquiring the fourth time series of signals indicative of the comfort parameter from a fourth sensor (5a - 5d) in the at least one second cluster.

The third sensor (5a - 5d) is preferably different from the fourth sensor (5a - 5d). The comfort parameter ideally is a temperature, especially a room temperature. The third sensor (5a - 5d) preferably comprises a third temperature sensor (5a - 5d). The third sensor (5a - 5d) ideally is a third temperature sensor (5a - 5d). The fourth sensor (5a - 5d) preferably comprises a fourth temperature sensor (5a - 5d). The fourth sensor (5a - 5d) ideally is a fourth temperature sensor (5a - 5d). In a special embodiment, the third sensor (5a - 5d) comprises the first temperature sensor (5a - 5d) and the second temperature sensor (5a - 5d).

The present disclosure also teaches any of the aforementioned methods involving the at least one first cluster, the method comprising the steps of:

recording the third time series of signals indicative of the comfort parameter in the at least one first cluster; and
recording the fourth time series of signals indicative of the comfort parameter in the at least one second cluster.

The at least one first cluster is advantageously different from the at least one second cluster. The at least one first space (4a - 4d), the at least one second space (4a - 4d), the at least one third space (4a - 4d), and the at least one fourth space (4a - 4d) are ideally mutually different.

The instant disclosure still teaches any of the aforementioned methods involving the at least one first cluster, the method comprising the step of:
calculating the third temperature difference of the at least one first cluster from the third time series of measured values and calculating the fourth temperature difference of the at least one second cluster from the fourth time series of measured values.

The present disclosure yet further teaches any of the aforementioned methods, the method comprising the steps of:

calculating the third temperature difference of the at least one first cluster from the third time series of measured values as a difference between two consecutively measured values of the third time series of measured values; and calculating the fourth temperature difference of the at least one second cluster from the fourth time series of measured values as a difference between two consecutively measured values of the fourth time series of measured values.

The instant disclosure also teaches any of the aforementioned methods involving the at least one first cluster, the method comprising the step of:
calculating the thermal power balance of the site, the thermal power balance involving:

- the value of the thermal capacitance $C_c$ of the at least one first cluster;
- the value of the thermal capacitance $C_c$ of the at least one second cluster;
- the demand for cooling $\dot{Q}_{C,t}^{demand\ for\ cooling}$ and/or the demand for heat $\dot{Q}_{C,t}^{demand\ for\ heat}$ of the at least one first cluster;
- the demand for cooling $\dot{Q}_{C,t}^{demand\ for\ cooling}$ and/or the demand for heat $\dot{Q}_{C,t}^{demand\ for\ heat}$ of the at least one second cluster;
- the cooling power $\dot{Q}_{C,t}^{cool}$ and/or the heating power $\dot{Q}_{C,t}^{heat}$ for the at least one first cluster;
- the cooling power $\dot{Q}_{C,t}^{cool}$ and/or the heating power $\dot{Q}_{C,t}^{heat}$ for the at least one second cluster; and
- the third temperature difference and the fourth temperature difference.

The present disclosure further teaches any of the aforementioned methods involving the at least one first cluster, the method comprising the step of:
determining the thermal power balance of the site, the thermal power balance comprising:

- the value of the thermal capacitance $C_c$ of the at least one first cluster;
- the value of the thermal capacitance $C_c$ of the at least one second cluster;
- the demand for cooling $\dot{Q}_{C,t}^{demand\ for\ cooling}$ and/or the demand for heat $\dot{Q}_{C,t}^{demand\ for\ heat}$ of the at least one first cluster;
- the demand for cooling $\dot{Q}_{C,t}^{demand\ for\ cooling}$ and/or the demand for heat $\dot{Q}_{C,t}^{demand\ for\ heat}$ of the at least one second cluster;
- the cooling power $\dot{Q}_{C,t}^{cool}$ and/or the heating power $\dot{Q}_{C,t}^{heat}$ for the at least one first cluster;
- the cooling power $\dot{Q}_{C,t}^{cool}$ and/or the heating power $\dot{Q}_{C,t}^{heat}$ for the at least one second cluster; and
- the third temperature difference and the fourth temperature difference.

The present disclosure still further teaches any of the aforementioned methods involving the at least one first cluster, the method comprising the step of:
calculating the thermal power balance of the site, the thermal power balance comprising:

- the value of the thermal capacitance $C_c$ of the at least one first cluster;
- the value of the thermal capacitance $C_c$ of the at least one second cluster;
- the demand for cooling $\dot{Q}_{C,t}^{demand\ for\ cooling}$ and/or the demand for heat $\dot{Q}_{C,t}^{demand\ for\ heat}$ of the at least one first cluster;
- the demand for cooling $\dot{Q}_{C,t}^{demand\ for\ cooling}$ and/or the demand for heat $\dot{Q}_{C,t}^{demand\ for\ heat}$ of the at least one second cluster;
- the cooling power $\dot{Q}_{C,t}^{cool}$ and/or the heating power $\dot{Q}_{C,t}^{heat}$ for the at least one first cluster;

- the cooling power $\dot{Q}_{C,t}^{cool}$ and/or the heating power $\dot{Q}_{C,t}^{heat}$ for the at least one second cluster; and
- the third temperature difference and the fourth temperature difference.

The instant disclosure also teaches any of the aforementioned methods involving the at least one first cluster, the method comprising the step of:

using the thermal power balance to calculate the cooling power $\dot{Q}_{C,t}^{cool}$ and/or the heating power $\dot{Q}_{C,t}^{heat}$ for the at least one first cluster.

The present disclosure further teaches any of the aforementioned methods involving the at least one first cluster, the method comprising the step of:

solving the thermal power balance to determine the cooling power $\dot{Q}_{C,t}^{cool}$ and/or the heating power $\dot{Q}_{C,t}^{heat}$ for the at least one first cluster.

The instant disclosure still further teaches any of the aforementioned methods involving the at least one first cluster, the method comprising the step of:

solving the thermal power balance to calculate the cooling power $\dot{Q}_{C,t}^{cool}$ and/or the heating power $\dot{Q}_{C,t}^{heat}$ for the at least one first cluster.

The present disclosure also teaches any of the aforementioned methods involving the at least one first cluster, the method comprising the step of:

using the system of mathematical relationships to calculate the cooling power $\dot{Q}_{C,t}^{cool}$ and/or the heating power $\dot{Q}_{C,t}^{heat}$ for the at least one first cluster.

The instant disclosure further teaches any of the aforementioned methods involving the at least one first cluster, the method comprising the step of:

solving the system of mathematical relationships to determine the cooling power $\dot{Q}_{C,t}^{cool}$ and/or the heating power $\dot{Q}_{C,t}^{heat}$ for the at least one first cluster.

The present disclosure still further teaches any of the aforementioned methods involving the at least one first cluster, the method comprising the steps of:

solving the system of mathematical relationships to calculate the cooling power $\dot{Q}_{C,t}^{cool}$ and/or the heating power $\dot{Q}_{C,t}^{heat}$ for the at least one first cluster; and

charging the at least one thermal energy exchanger (6a - 6g) with thermal energy as a function of the cooling power $\dot{Q}_{C,t}^{cool}$ calculated for the at least one first cluster and/or as a function of the heating power $\dot{Q}_{C,t}^{heat}$ calculated for the at least one first cluster.

The instant disclosure also teaches any of the aforementioned methods involving the at least one first cluster, the method comprising the steps of:

using the system of equations to calculate the cooling power $\dot{Q}_{C,t}^{cool}$ and/or the heating power $\dot{Q}_{C,t}^{heat}$ for the at least one first cluster; and

charging the at least one thermal energy exchanger (6a - 6g) with thermal energy as a function of the cooling power $\dot{Q}_{C,t}^{cool}$ calculated for the at least one first cluster and/or as a function of the heating power $\dot{Q}_{C,t}^{heat}$ calculated for the at least one first cluster.

The present disclosure further teaches any of the aforementioned methods involving the at least one first cluster, the method comprising the step of:

solving the system of equations to determine the cooling power $\dot{Q}_{C,t}^{cool}$ and/or the heating power $\dot{Q}_{C,t}^{heat}$ for the at least one first cluster.

The instant disclosure still further teaches any of the aforementioned methods involving the at least one first cluster, the method comprising the steps of:

solving the system of equations to calculate the cooling power $\dot{Q}_{C,t}^{cool}$ and/or the heating power $\dot{Q}_{C,t}^{heat}$ for the at least one first cluster; and

charging the at least one thermal energy exchanger (6a - 6g) with thermal energy as a function of the cooling power $\dot{Q}_{C,t}^{cool}$ calculated for the at least one first cluster and/or as a function of the heating power $\dot{Q}_{C,t}^{heat}$ calculated for the at least one first cluster.

By charging the at least one thermal energy exchanger (6a - 6g) with thermal energy as a function of the cooling power $\dot{Q}_{C,t}^{cool}$ calculated for the at least one first cluster, a flow of a coolant medium into the at least one thermal energy exchanger (6a - 6d) is produced as a function of the cooling power $\dot{Q}_{C,t}^{cool}$ calculated for the at least one first cluster. More specifically, a flow of a coolant medium into a conduit of the at least one thermal energy exchanger (6a - 6d) is produced as a function of the cooling power $\dot{Q}_{C,t}^{cool}$ calculated for the at least one first cluster.

By charging the at least one thermal energy exchanger (6a - 6g) with thermal energy as a function of the cooling power $\dot{Q}_{C,t}^{cool}$ determined for the at least one first cluster, a flow of a coolant medium into the at least one thermal energy exchanger (6a - 6d) is produced as a function of the cooling power $\dot{Q}_{C,t}^{cool}$ determined for the at least one first cluster. More specifically, a flow of a coolant medium into a conduit of the at least one thermal energy exchanger (6a - 6d) is produced as a function of the cooling power $\dot{Q}_{C,t}^{cool}$ determined for the at least one first cluster.

By charging the at least one thermal energy exchanger (6a - 6g) with thermal energy as a function of the heating power $\dot{Q}_{C,t}^{heat}$ calculated for the at least one first cluster, a flow of a heating medium into the at least one thermal energy exchanger (6a - 6d) is produced as a function of the heating power $\dot{Q}_{C,t}^{heat}$ calculated for the at least one first cluster. More specifically, a flow of a heating medium into a conduit of the at least one thermal energy exchanger (6a - 6d) is produced as a function of the heating power $\dot{Q}_{C,t}^{heat}$ calculated for the at least one first cluster.

By charging the at least one thermal energy exchanger (6a - 6g) with thermal energy as a function of the heating power $\dot{Q}_{C,t}^{heat}$ determined for the at least one first cluster, a flow of a heating medium into the at least one thermal energy exchanger (6a - 6d) is produced as a function of the heating power $\dot{Q}_{C,t}^{heat}$ determined for the at least one first cluster. More specifically, a flow of a heating medium into a conduit of the at least one thermal energy exchanger (6a - 6d) is produced as a function of the heating power $\dot{Q}_{C,t}^{heat}$ determined for the at least one first cluster.

The present disclosure also teaches any of the aforementioned methods involving the at least one first cluster, the method comprising the steps of:

determining the value of the thermal capacitance $C_c$ of the at least one first cluster by adding up the value of the thermal capacitance $C$ of the at least one first space (4a - 4d) and the value of the thermal capacitance $C$ of the at least one second space (4a - 4d); and
determining the value of the thermal capacitance $C_c$ of the at least one second cluster by adding up a value of a thermal capacitance $C$ of the at least one third space (4a - 4d) and a value of a thermal capacitance $C$ of the at least one fourth space (4a - 4d).

The instant disclosure also teaches any of the aforementioned methods involving the at least one first cluster, the method comprising the steps of:

calculating the value of the thermal capacitance $C_c$ of the at least one first cluster by adding up the value of the thermal capacitance $C$ of the at least one first space (4a - 4d) and the value of the thermal capacitance $C$ of the at least one second space (4a - 4d); and

calculating the value of the thermal capacitance $C_c$ of the at least one second cluster by adding up a value of the thermal capacitance $C$ of the at least one third space (4a - 4d) and the value of a thermal capacitance $C$ of the at least one fourth space (4a - 4d).

The present disclosure also teaches any of the aforementioned methods involving the at least one first cluster, the method comprising the steps of:

determining the demand for cooling $\dot{Q}_{C,t}^{demand\ for\ cooling}$ of the at least one first cluster by adding up the demand for cooling $\dot{Q}_{t}^{demand\ for\ cooling}$ of the at least one first space (4a - d) and the demand for cooling $\dot{Q}_{t}^{demand\ for\ cooling}$ of the at least one second space (4a - d); and

determining the demand for cooling $\dot{Q}_{C,t}^{demand\ for\ cooling}$ of the at least one second cluster by adding up a demand for cooling $\dot{Q}_{t}^{demand\ for\ cooling}$ of the at least one third space (4a - d) and a demand for cooling $\dot{Q}_{t}^{demand\ for\ cooling}$ of the at least one fourth space (4a - d).

The instant disclosure also teaches any of the aforementioned methods involving the at least one first cluster, the method comprising the steps of:

calculating the demand for cooling $\dot{Q}_{C,t}^{demand\ for\ cooling}$ of the at least one first cluster by adding up the demand for cooling $\dot{Q}_{t}^{demand\ for\ cooling}$ of the at least one first space (4a - d) and the demand for cooling $\dot{Q}_{t}^{demand\ for\ cooling}$ of the at least one second space (4a - d); and

calculating the demand for cooling $\dot{Q}_{C,t}^{demand\ for\ cooling}$ of the at least one second cluster by adding up a demand for cooling $\dot{Q}_{t}^{demand\ for\ cooling}$ of the at least one third space (4a - d) and a demand for cooling $\dot{Q}_{t}^{demand\ for\ cooling}$ of the at least one fourth space (4a - d).

The present disclosure also teaches any of the aforementioned methods involving the at least one first cluster, the method comprising the steps of:

determining the demand for heat $\dot{Q}_{C,t}^{demand\ for\ heat}$ of the at least one first cluster by adding up the demand for heat $\dot{Q}_{t}^{demand\ for\ heat}$ of the at least one first space (4a - d) and the demand for heat $\dot{Q}_{t}^{demand\ for\ heat}$ of the at least one second space (4a - d); and

determining the demand for heat $\dot{Q}_{C,t}^{demand\ for\ heat}$ of the at least one second cluster by adding up a demand for heat $\dot{Q}_{t}^{demand\ for\ heat}$ of the at least one third space (4a - d) and a demand for heat $\dot{Q}_{t}^{demand\ for\ heat}$ of the at least one fourth space (4a - d).

The instant disclosure also teaches any of the aforementioned methods involving the at least one first cluster, the method comprising the steps of:

calculating the demand for heat $\dot{Q}_{C,t}^{demand\ for\ heat}$ of the at least one first cluster by adding up the demand for heat $\dot{Q}_{t}^{demand\ for\ heat}$ of the at least one first space (4a - d) and the demand for heat $\dot{Q}_{t}^{demand\ for\ heat}$ of the at least one second space (4a - d); and

calculating the demand for heat $\dot{Q}_{C,t}^{demand\ for\ heat}$ of the at least one second cluster by adding up the demand for heat $\dot{Q}_t^{demand\ for\ heat}$ of the at least one third space (4a - d) and the demand for heat $\dot{Q}_t^{demand\ for\ heat}$ of the at least one fourth space (4a - d).

The present disclosure also teaches any of the aforementioned methods involving the at least one first cluster, the method comprising the steps of:

comparing at least one measured value of the third time series of measured values to a lower limit value;
if the at least one measured value of the third time series of measured values is less than the lower limit value:

determining a lower limit deviation as a difference between the at least one measured value of the third time series of measured values and the lower limit value; and
charging the at least one thermal energy exchanger (6a - 6d) with thermal energy exclusively as a function of the lower limit deviation.

The instant disclosure also teaches any of the aforementioned methods involving the lower limit deviation and the at least one first cluster, the method comprising the step of:
calculating the lower limit deviation as a difference between the at least one measured value of the third time series of measured values and the lower limit value.

By charging the at least one thermal energy exchanger (6a - 6d) with thermal energy exclusively as a function of the lower limit deviation, a flow of a heated medium into the at least one thermal energy exchanger (6a - 6d) is produced exclusively as a function of the lower limit deviation. More specifically, a flow of a heated medium into a conduit of the at least one thermal energy exchanger (6a - 6d) is produced exclusively as a function of the lower limit deviation.

In an embodiment, the lower limit value is a predetermined lower limit value.

The instant disclosure also teaches a computer program comprising instructions which, when the program is executed by a computer, cause the computer to carry out the steps of any of the aforementioned methods.

A system controller (8a, 8b) in operative communication with at least one thermal energy exchanger (6a - 6d) having means adapted to execute the steps of any of the aforementioned methods.

The instant disclosure also teaches a computer-readable medium comprising instructions which, when executed by a computer, cause the computer to carry out the steps of any of the aforementioned methods.

The instant disclosure also teaches computer-readable data carrier having stored thereon any of aforementioned the computer programs.

A system controller (8a, 8b) in operative communication with at least one thermal energy exchanger (6a - 6d) and in operative communication with a first sensor (5a - 5d) in at least one first space (4a - 4d) of a site and in operative communication with a second sensor (5a - 5d) in at least one second space (4a - 4d) of the site, the system controller (8a, 8b) having means adapted to execute the steps of any of the aforementioned methods.

A computer program comprising instructions to cause the system controller (8a, 8b) to execute the steps of any of the aforementioned methods.

A computer-readable medium having stored thereon the aforementioned computer program.

Reference numerals

1a heat source
1b source of cooling
2 duct network
2a - 2d branches
2r return duct
3a - 3g valves
4a - 4d spaces
5a - 5d sensors
6a - 6g thermally activated building structures
7 temperature controller
8a, 8b system controllers
9 buffer
10 neural network

11 - 17 input neurons
18 hidden layer
19 - 22 neurons
23 hidden layer
24 - 27 neurons
28 output neuron

**Claims**

1. A method of controlling a site having a plurality of spaces (4a - 4d), at least one first space (4a - 4d) of the plurality of spaces (4a - 4d) having at least one thermal energy exchanger (6a - 6g), the method comprising the steps of:

   acquiring a first time series of signals indicative of a comfort parameter in the at least one first space (4a - 4d) of the site;
   acquiring a second time series of signals indicative of the comfort parameter in at least one second space (4a - 4d) of the site;
   producing a first time series of measured values indicative of the comfort parameter from the first time series of signals;
   producing a second time series of measured values indicative of the comfort parameter from the second time series of signals;
   determining a first temperature difference of the at least one first space (4a - 4d) from the first time series of measured values and determining a second temperature difference of the at least one second space (4a - 4d) from the second time series of measured values;
   using a system of equations making up a thermal power balance of the site, the system of equations involving:

   - a value of a thermal capacitance $C$ of the at least one first space (4a - 4d) of the site;
   - a value of a thermal capacitance $C$ of the at least one second space (4a - 4d) of the site;
   - a cooling power $\dot{Q}_t^{cool}$ and/or a heating power $\dot{Q}_t^{heat}$ for the at least one first space (4a - 4d) of the site;
   - a cooling power $\dot{Q}_t^{cool}$ and/or a heating power $\dot{Q}_t^{heat}$ for the at least one second space (4a - 4d) of the site;
   - the first temperature difference and the second temperature difference; to determine the cooling power $\dot{Q}_t^{cool}$ and/or the heating power $\dot{Q}_t^{heat}$ for the at least one first space (4a - 4d);

   **characterised in that**

   the system of equations also involves

   - a demand for cooling $\dot{Q}_t^{demand\ for\ cooling}$ and/or a demand for heat $\dot{Q}_t^{demand\ for\ heat}$ of the at least one first space (4a - 4d) of the site;
   - a demand for cooling $\dot{Q}_t^{demand\ for\ cooling}$ and/or a demand for heat $\dot{Q}_t^{demand\ for\ heat}$ of the at least one second space (4a - 4d) of the site;

   and **in that**
   the at least one thermal energy exchanger (6a - 6g) has a predetermined thermal discharge characteristic; and **in that** the system of equations also involves the predetermined thermal discharge characteristic of the at least one thermal energy exchanger (6a - 6d), the predetermined discharge characteristic being a mathematical relationship indicative of thermal discharge versus time or a formula indicative of thermal discharge versus time; and **in that** the method comprises the step of:
   charging the at least one thermal energy exchanger (6a - 6g) with thermal energy as a function of the cooling power $\dot{Q}_t^{cool}$ determined for the at least one first space (4a - 4d) and/or as a function of the heating power $\dot{Q}_t^{heat}$ determined for the at least one first space (4a - 4d).

**2.** The method according to any of the claim 1, wherein at least one of the first time series of signals and the second time series of signals comprises a time stamp for each signal, the method comprising the steps of:

determining a time difference between two consecutive time stamps of the at least one time series of signals; and using the system of equations of the site, the system of equations additionally involving:

- the determined time difference.

**3.** The method according to any of the claims 1 to 2, the method comprising the steps of:

comparing at least one measured value of the first time series of measured values to a lower limit value; if the at least one measured value of the first time series of measured values is less than the lower limit value:

determining a lower limit deviation as a difference between the at least one measured value of the first time series of measured values and the lower limit value; and charging the at least one thermal energy exchanger (6a - 6d) with thermal energy exclusively as a function of the lower limit deviation.

**4.** The method according to any of the claims 1 to 3, the method comprising the steps of:

comparing at least one measured value of the first time series of measured values to an upper limit value; if the at least one measured value of the first time series of measured values is greater than the upper limit value:

determining an upper limit deviation as a difference between the at least one measured value of the first time series of measured values and the upper limit value; and charging the at least one thermal energy exchanger (6a - 6d) with thermal energy exclusively as a function of the upper limit deviation.

**5.** The method according to any of the claims 1 to 4, the method comprising the steps of:

acquiring a plurality of time series of signals indicative of the comfort parameter, each time series being associated with the comfort parameter in a space (4a - 4d) of the plurality of spaces (4a - 4d) of the site; producing a plurality of time series of measured values from the plurality of time series of signals; using the plurality of time series of measured values to determine a temperature difference of each space (4a - 4d); using the system of equations of the site, the system of equations involving:

- a value of a thermal capacitance $C$ of each space (4a - 4d) of the site;
- a demand for cooling $\dot{Q}_t^{demand\ for\ cooling}$ and/or a demand for heat $\dot{Q}_t^{demand\ for\ heat}$ of each space of the site;
- a cooling power $\dot{Q}_t^{cool}$ and/or a heating power $\dot{Q}_t^{heat}$ for each space (4a - 4d) of the site;
- a temperature difference of each space (4a - 4d) of the site; and
- the predetermined thermal discharge characteristic of the at least one thermal energy exchanger (6a - 6d).

**6.** The method according to claim 5, wherein at least one time series of the plurality of time series comprises a time stamp for each signal, the method comprising the steps of:

determining a time difference between two consecutive time stamps of the at least one time series of signals; and using the system of equations of the site, the system of equations additionally involving:

- the determined time difference.

**7.** The method according to any of the claims 1 to 6, the method comprising the steps of:

forming at least one first cluster comprising the at least one first space (4a - 4d) and the at least one second space (4a - 4d); forming at least one second cluster comprising at least one third space (4a - 4d) of the plurality of spaces (4a - 4d) and at least one fourth space (4a - 4d) of the plurality of spaces (4a -4d);

acquiring a third time series of signals indicative of the comfort parameter in the at least one first cluster;

acquiring a fourth time series of signals indicative of the comfort parameter in the at least one second cluster;

producing a third time series of measured values indicative of the comfort parameter from the third time series of signals;

producing a fourth time series of measured values indicative of the comfort parameter from the fourth time series of signals;

determining a third temperature difference of the at least one first cluster from the third time series of measured values and determining a fourth temperature difference of the at least one second cluster from the fourth time series of measured values;

using the system of equations of the site, the system of equations involving:

- a value of a thermal capacitance $C_c$ of the at least one first cluster;
- a value of a thermal capacitance $C_c$ of the at least one second cluster;

- a demand for cooling $\dot{Q}_{C,t}^{demand\ for\ cooling}$ and/or a demand for heat $\dot{Q}_{C,t}^{demand\ for\ heat}$ of the at least one first cluster;

- a demand for cooling $\dot{Q}_{C,t}^{demand\ for\ cooling}$ and/or a demand for heat $\dot{Q}_{C,t}^{demand\ for\ heat}$ of the at least one second cluster;

- a cooling power $\dot{Q}_{C,t}^{cool}$ and/or a heating power $\dot{Q}_{C,t}^{heat}$ for the at least one first cluster;

- a cooling power $\dot{Q}_{C,t}^{cool}$ and/or a heating power $\dot{Q}_{C,t}^{heat}$ for the at least one second cluster;

- the third temperature difference and the fourth temperature difference;

- the predetermined thermal discharge characteristic of the at least one thermal energy exchanger (6a - 6d); to determine the cooling power $\dot{Q}_{C,t}^{cool}$ and/or the heating power $\dot{Q}_{C,t}^{heat}$ for the at least one first cluster; and

charging the at least one thermal energy exchanger (6a - 6g) with thermal energy as a function of the cooling power $\dot{Q}_{C,t}^{cool}$ determined for the at least one first cluster and/or as a function of the heating power $\dot{Q}_{C,t}^{heat}$ determined for the at least one second cluster.

8. The method according to claim 7, the method comprising the steps of:

determining the value of the thermal capacitance $C_c$ of the at least one first cluster by adding up the value of the thermal capacitance $C$ of the at least one first space (4a - 4d) and the value of the thermal capacitance $C$ of the at least one second space (4a - 4d); and

determining the value of the thermal capacitance $C_c$ of the at least one second cluster by adding up a value of a thermal capacitance $C$ of the at least one third space (4a - 4d) and a value of a thermal capacitance $C$ of the at least one fourth space (4a - 4d).

9. The method according to any of the claims 7 to 8, the method comprising the steps of:

determining the demand for cooling $\dot{Q}_{C,t}^{demand\ for\ cooling}$ of the at least one first cluster by adding up the demand for cooling $\dot{Q}_{t}^{demand\ for\ cooling}$ of the at least one first space (4a - d) and the demand for cooling

$\dot{Q}_{t}^{demand\ for\ cooling}$ of the at least one second space (4a - d); and

determining the demand for cooling $\dot{Q}_{C,t}^{demand\ for\ cooling}$ of the at least one second cluster by adding up a demand for cooling $\dot{Q}_{t}^{demand\ for\ cooling}$ of the at least one third space (4a - d) and a demand for cooling

$\dot{Q}_{t}^{demand\ for\ cooling}$ of the at least one fourth space (4a - d).

**10.** The method according to any of the claims 7 to 8, the method comprising the steps of:

determining the demand for heat $\dot{Q}_{C,t}^{demand\ for\ heat}$ of the at least one first cluster by adding up the demand for heat $\dot{Q}_{t}^{demand\ for\ heat}$ of the at least one first space (4a - d) and the demand for heat $\dot{Q}_{t}^{demand\ for\ heat}$ of the at least one second space (4a - d); and

determining the demand for heat $\dot{Q}_{C,t}^{demand\ for\ heat}$ of the at least one second cluster by adding up a demand for heat $\dot{Q}_{t}^{demand\ for\ heat}$ of the at least one third space (4a - d) and a demand for heat $\dot{Q}_{t}^{demand\ for\ heat}$ of the at least one fourth space (4a - d).

**11.** The method according to any of the claims 7 to 10, the method comprising the steps of:

comparing at least one measured value of the third time series of measured values to a lower limit value;
if the at least one measured value of the third time series of measured values is less than the lower limit value:

determining a lower limit deviation as a difference between the at least one measured value of the third time series of measured values and the lower limit value; and
charging the at least one thermal energy exchanger (6a - 6d) with thermal energy exclusively as a function of the lower limit deviation.

**12.** A computer program comprising instructions which, when the program is executed by a computer, cause the computer to carry out the steps of any of the methods of claims 1 to 11.

**13.** A computer-readable medium comprising instructions which, when executed by a computer, cause the computer to carry out the steps of any of the methods of claims 1 to 11.

**14.** A computer-readable data carrier having stored thereon the computer program of claim 12.

**Patentansprüche**

**1.** Verfahren zum Regeln eines Standorts mit mehreren Räumen (4a - 4d), wobei mindestens ein erster Raum (4a - 4d) der mehreren Räume (4a - 4d) mindestens einen thermischen Energietauscher (6a - 6g) aufweist, wobei das Verfahren folgende Schritte umfasst:

Erfassen einer ersten Zeitreihe von Signalen, die einen Komfortparameter in dem mindestens einen ersten Raum (4a - 4d) an dem Standort angeben,
Erfassen einer zweiten Zeitreihe von Signalen, die den Komfortparameter in mindestens einem zweiten Raum (4a - 4d) an dem Standort angeben,
Erstellen einer ersten Zeitreihe von Messwerten, die den Komfortparameter angeben, aus der ersten Zeitreihe von Signalen,
Erstellen einer zweiten Zeitreihe von Messwerten, die den Komfortparameter angeben, aus der zweiten Zeitreihe von Signalen,
Bestimmen einer ersten Temperaturdifferenz in dem mindestens einen ersten Raum (4a - 4d) aus der ersten Zeitreihe von Messwerten und Bestimmen einer zweiten Temperaturdifferenz in dem mindestens einen zweiten Raum (4a - 4d) aus der zweiten Zeitreihe von Messwerten,
Benutzen eines Gleichungssystems, das eine thermische Leistungsbilanz für den Standort ergibt, wobei das Gleichungssystem Folgendes umfasst:

- einen Wert für eine Wärmekapazität C des mindestens einen ersten Raums (4a - 4d) am Standort,
- einen Wert für eine Wärmekapazität C des mindestens einen zweiten Raums (4a - 4d) am Standort,

- eine Kühlleistung $\dot{Q}_{t}^{Kühl}$ und/oder eine Heizleistung $\dot{Q}_{t}^{heat}$ für den mindestens einen ersten Raum (4a - 4d) am Standort,

- eine Kühlleistung $\dot{Q}_t^{Kühl}$ und/oder eine Heizleistung $\dot{Q}_t^{heat}$ für den mindestens einen zweiten Raum (4a - 4d) am Standort,

- die erste und die zweite Temperaturdifferenz, zum Bestimmen der Kühlleistung $\dot{Q}_t^{Kühl}$ und/oder der Heizleistung $\dot{Q}_t^{heat}$ für den mindestens einen ersten Raum (4a - 4d),

**dadurch gekennzeichnet, dass**

das Gleichungssystem auch Folgendes umfasst:

- einen Kühlbedarf $\dot{Q}_t^{Kühlbedarf}$ und/oder einen Heizbedarf $\dot{Q}_t^{Heizbedarf}$ für den mindestens einen ersten Raum (4a - 4d) am Standort,

- einen Kühlbedarf $\dot{Q}_t^{Kühlbedarf}$ und/oder einen Heizbedarf $\dot{Q}_t^{Heizbedarf}$ für den mindestens einen zweiten Raum (4a - 4d) am Standort,

und dass der mindestens eine thermische Energietauscher (6a - 6g) eine vorgegebene thermische Abgabecharakteristik aufweist, und dass das Gleichungssystem auch die vorgegebene thermische Abgabecharakteristik des mindestens einen thermischen Energietauschers (6a - 6d) umfasst, wobei es sich bei der vorgegebenen thermischen Abgabecharakteristik um eine mathematische Beziehung handelt, die eine Abgabe thermischer Energie über die Zeit angibt, oder um eine Formel, die eine Abgabe thermischer Energie über die Zeit angibt, und dass das Verfahren folgenden Schritt umfasst:
Aufladen des mindestens einen thermischen Energietauschers (6a - 6g) mit thermischer Energie in Abhängigkeit von der Kühlleistung , die für den mindestens einen ersten Raum (4a - 4d) bestimmt wird, und/oder in Abhängigkeit von der Heizleistung $\dot{Q}_t^{heat}$ ', die für den mindestens einen ersten Raum (4a - 4d) bestimmt wird.

2. Das Verfahren nach Anspruch 1, wobei die erste und/oder die zweite Zeitreihe von Signalen einen Zeitstempel für jedes Signal umfasst, wobei das Verfahren folgende Schritte umfasst:

Bestimmen einer Zeitdifferenz zwischen zwei aufeinanderfolgenden Zeitstempeln aus der mindestens einen Zeitreihe von Signalen und
Benutzen des Gleichungssystems für den Standort, wobei das Gleichungssystem zusätzlich Folgendes umfasst:

- die bestimmte Zeitdifferenz.

3. Das Verfahren nach einem der Ansprüche 1 bis 2, das folgende Schritte umfasst:

Vergleichen mindestens eines Messwerts aus der ersten Zeitreihe von Messwerten mit einem unteren Grenzwert,
wenn der mindestens eine Messwert aus der ersten Zeitreihe von Messwerten unter dem unteren Grenzwert liegt:

Bestimmen einer Abweichung von dem unteren Grenzwert als Differenz zwischen dem mindestens einen Messwert aus der ersten Zeitreihe von Messwerten und dem unteren Grenzwert und
ausschließlich in Abhängigkeit von der Abweichung von dem unteren Grenzwert Aufladen des mindestens einen thermischen Energietauschers (6a - 6d) mit thermischer Energie.

4. Das Verfahren nach einem der Ansprüche 1 bis 3, das folgende Schritte umfasst:

Vergleichen mindestens eines Messwerts aus der ersten Zeitreihe von Messwerten mit einem oberen Grenzwert,
wenn der mindestens eine Messwert aus der ersten Zeitreihe von Messwerten über dem oberen Grenzwert liegt:

Bestimmen einer Abweichung von dem oberen Grenzwert als Differenz zwischen dem mindestens einen Messwert aus der ersten Zeitreihe von Messwerten und dem oberen Grenzwert und

ausschließlich in Abhängigkeit von der Abweichung von dem oberen Grenzwert Aufladen des mindestens einen thermischen Energietauschers (6a - 6d) mit thermischer Energie.

**5.** Das Verfahren nach einem der Ansprüche 1 bis 4, das folgende Schritte umfasst:

Erfassen mehrerer Zeitreihen von Signalen, die den Komfortparameter angeben, wobei jede Zeitreihe mit dem Komfortparameter in einem Raum (4a - 4d) unter den mehreren Räumen (4a - 4d) am Standort verknüpft ist,

Erstellen von mehreren Zeitreihen von Messwerten aus den mehreren Zeitreihen von Signalen,

Benutzen der mehreren Zeitreihen von Messwerten zum Bestimmen einer Temperaturdifferenz für jeden Raum (4a - 4d),

Benutzen des Gleichungssystems für den Standort, wobei das Gleichungssystem Folgendes umfasst:

- einen Wert für eine Wärmekapazität C jedes Raums (4a - 4d) am Standort,
- einen Kühlbedarf $\dot{Q}_t^{K\ddot{u}hlbedarf}$ und/oder einen Heizbedarf $\dot{Q}_t^{Heizbedarf}$ für jeden Raum am Standort,
- eine Kühlleistung $\dot{Q}_t^{K\ddot{u}hl}$ und/oder eine Heizleistung $\dot{Q}_t^{Heiz}$ für jeden Raum (4a - 4d) am Standort,
- eine Temperaturdifferenz für jeden Raum (4a - 4d) am Standort und
- eine vorgegebene thermische Abgabecharakteristik für den mindestens einen thermischen Energietauscher (6a - 6d).

**6.** Das Verfahren nach Anspruch 5, wobei mindestens eine der mehreren Zeitreihen einen Zeitstempel für jedes Signal umfasst, wobei das Verfahren folgende Schritte umfasst:

Bestimmen einer Zeitdifferenz zwischen zwei aufeinanderfolgenden Zeitstempeln aus der mindestens einen Zeitreihe von Signalen und

Benutzen des Gleichungssystems für den Standort, wobei das Gleichungssystem Folgendes umfasst:

- die bestimmte Zeitdifferenz.

**7.** Das Verfahren nach einem der Ansprüche 1 bis 6, das folgende Schritte umfasst:

Bilden mindestens einer ersten Gruppe, die den mindestens einen ersten Raum (4a - 4d) und den mindestens einen zweiten Raum (4a - 4d) umfasst,

Bilden mindestens einer zweiten Gruppe, die mindestens einen dritten Raum (4a - 4d) und mindestens einen vierten Raum (4a - 4d) der mehreren Räume (4a - 4d) umfasst,

Erfassen einer dritten Zeitreihe von Signalen, die den Komfortparameter in der mindestens einen ersten Gruppe angeben,

Erfassen einer vierten Zeitreihe von Signalen, die den Komfortparameter in der mindestens einen zweiten Gruppe angeben,

Erstellen einer dritten Zeitreihe von Messwerten, die den Komfortparameter angeben, aus der dritten Zeitreihe von Signalen,

Erstellen einer vierten Zeitreihe von Messwerten, die den Komfortparameter angeben, aus der vierten Zeitreihe von Signalen,

Bestimmen einer dritten Temperaturdifferenz für die mindestens eine erste Gruppe aus der dritten Zeitreihe von Messwerten und einer vierten Temperaturdifferenz für die mindestens eine zweite Gruppe aus der vierten Zeitreihe von Messwerten,

Benutzen des Gleichungssystems für den Standort, wobei das Gleichungssystem Folgendes umfasst:

- einen Wert für eine Wärmekapazität Cc der mindestens einen ersten Gruppe,
- einen Wert für eine Wärmekapazität Cc der mindestens einen zweiten Gruppe,
- einen Kühlbedarf $\dot{Q}_{C,t}^{K\ddot{u}hlbedarf}$ und/oder einen Heizbedarf $\dot{Q}_{C,t}^{Heizbedarf}$ für die mindestens eine erste Gruppe,

- einen Kühlbedarf $\dot{Q}_{C,t}^{Kühlbedarf}$ und/oder einen Heizbedarf $\dot{Q}_{C,t}^{Heizbedarf}$ für die mindestens eine zweite Gruppe,

- eine Kühlleistung $\dot{Q}_{C,t}^{Kühl}$ und/oder eine Heizleistung $\dot{Q}_{C,t}^{Heiz}$ für die mindestens eine erste Gruppe,

- eine Kühlleistung $\dot{Q}_{C,t}^{Kühl}$ und/oder eine Heizleistung $\dot{Q}_{C,t}^{Heiz}$ für die mindestens eine zweite Gruppe,

- die dritte und die vierte Temperaturdifferenz,

- die vorgegebene thermische Abgabecharakteristik für den mindestens einen thermischen Energietauscher (6a - 6d),

zum Bestimmen der Kühlleistung $\dot{Q}_{C,t}^{Kühl}$ und/oder der Heizleistung $\dot{Q}_{C,t}^{Heiz}$ für die mindestens eine erste Gruppe und

Aufladen des mindestens einen thermischen Energietauschers (6a - 6g) mit thermischer Energie in Abhängigkeit von der Kühlleistung $\dot{Q}_{C,t}^{Kühl}$ , die für die mindestens eine erste Gruppe bestimmt wird, und/oder in Abhängigkeit von der Heizleistung $\dot{Q}_{C,t}^{Heiz}$ , die für die mindestens eine zweite Gruppe bestimmt wird.

**8.** Das Verfahren nach Anspruch 7, das folgende Schritte umfasst:

Bestimmen des Werts für die Wärmekapazität Cc der mindestens einen ersten Gruppe durch Addieren des Werts für die Wärmekapazität C des mindestens einen ersten Raums (4a - 4d) und des Werts für die Wärmekapazität C des mindestens einen zweiten Raums (4a - 4d) und

Bestimmen des Werts für die Wärmekapazität Cc der mindestens einen zweiten Gruppe durch Addieren eines Werts für eine Wärmekapazität C des mindestens einen dritten Raums (4a - 4d) und eines Werts für die Wärmekapazität C des mindestens einen vierten Raums (4a - 4d).

**9.** Das Verfahren nach einem der Ansprüche 7 bis 8, das folgende Schritte umfasst:

Bestimmen des Kühlbedarfs $\dot{Q}_{C,t}^{Kühlbedarf}$ der mindestens einen ersten Gruppe durch Addieren des Kühlbe-

darfs $\dot{Q}_{t}^{Kühlbedarf}$ des mindestens einen ersten Raums (4a - d) und des Kühlbedarfs $\dot{Q}_{t}^{Kühlbedarf}$ des mindestens einen zweiten Raums (4a - d) und

Bestimmen des Kühlbedarfs $\dot{Q}_{C,t}^{Kühlbedarf}$ der mindestens einen zweiten Gruppe durch Addieren eines Kühl-

bedarfs $\dot{Q}_{t}^{Kühlbedarf}$ des mindestens einen dritten Raums (4a - d) und eines Kühlbedarfs $\dot{Q}_{t}^{Kühlbedarf}$ des mindestens einen vierten Raums (4a - d) .

**10.** Das Verfahren nach einem der Ansprüche 7 bis 8, das folgende Schritte umfasst:

Bestimmen des Heizbedarfs $\dot{Q}_{C,t}^{Heizbedarf}$ der mindestens einen ersten Gruppe durch Addieren des Heizbedarfs $\dot{Q}_{t}^{Heizbedarf}$ des mindestens einen ersten Raums (4a - d) und des Heizbedarfs $\dot{Q}_{t}^{Heizbedarf}$ des mindestens einen zweiten Raums (4a - d) und

Bestimmen des Heizbedarfs $\dot{Q}_{C,t}^{Heizbedarf}$ der mindestens einen zweiten Gruppe durch Addieren eines Heizbedarfs $\dot{Q}_{t}^{Heizbedarf}$ des mindestens einen dritten Raums (4a - d) und eines Heizbedarfs $\dot{Q}_{t}^{Heizbedarf}$ des mindestens einen vierten Raums (4a - d) .

**11.** Das Verfahren nach einem der Ansprüche 7 bis 10, das folgende Schritte umfasst:

Vergleichen mindestens eines Messwerts aus der dritten Zeitreihe von Messwerten mit einem unteren Grenzwert,

wenn der mindestens eine Messwert aus der dritten Zeitreihe von Messwerten unter dem unteren Grenzwert liegt:

Bestimmen einer Abweichung von dem unteren Grenzwert als Differenz zwischen dem mindestens einen Messwert aus der dritten Zeitreihe von Messwerten und dem unteren Grenzwert und

ausschließlich in Abhängigkeit von der Abweichung von dem unteren Grenzwert Aufladen des mindestens einen thermischen Energietauschers (6a - 6d) mit thermischer Energie.

12. Computerprogramm mit Anweisungen, welche, wenn das Programm von einem Computer ausgeführt wird, diesen dazu veranlassen, die Schritte eines der Verfahren nach Anspruch 1 bis 11 durchzuführen.

13. Computerlesbares Medium, das Anweisungen umfasst, welche, wenn sie von einem Computer ausgeführt werden, diesen dazu veranlassen, die Schritte eines der Verfahren nach Anspruch 1 bis 11 durchzuführen.

14. Computerlesbarer Datenträger, auf dem das Computerprogramm nach Anspruch 12 gespeichert ist.


**Revendications**

1. Procédé de régulation d'un site ayant une pluralité d'espaces (4a à 4d), au moins un premier espace (4a à 4d) de la pluralité d'espaces (4a à 4d) ayant au moins un échangeur d'énergie thermique (6a à 6g), le procédé comprenant les étapes de :

l'acquisition d'une première série chronologique de signaux indicatifs d'un paramètre de confort dans au moins un premier espace (4a à 4d) du site ;
l'acquisition d'une deuxième série chronologique de signaux indicatifs du paramètre de confort dans au moins un deuxième espace (4a à 4d) du site ;
la production d'une première série chronologique de valeurs mesurées indicatives du paramètre de confort à partir de la première série chronologique de signaux ;
la production d'une deuxième série chronologique de valeurs mesurées indicatives du paramètre de confort à partir de la deuxième série chronologique de signaux ;
la détermination d'une première différence de température de l'au moins un premier espace (4a à 4d) à partir de la première série chronologique de valeurs mesurées et la détermination d'une deuxième différence de température de l'au moins un deuxième espace (4a à 4d) à partir de la deuxième série chronologique de valeurs mesurées ;
l'utilisation d'un système d'équations établissant un équilibre de puissance thermique du site, le système d'équations impliquant :

- une valeur d'une capacité thermique C de l'au moins un premier espace (4a à 4d) du site ;
- une valeur d'une capacité thermique C de l'au moins un deuxième espace (4a à 4d) du site ;
- une puissance de refroidissement $\dot{Q}_t^{cool}$ et/ou une puissance de chauffage $\dot{Q}_t^{heat}$ pour l'au moins un premier espace (4a à 4d) du site ;
- une puissance de refroidissement $\dot{Q}_t^{cool}$ et/ou une puissance de chauffage $\dot{Q}_t^{heat}$ pour l'au moins un deuxième espace (4a à 4d) du site ;
- la première différence de température et la deuxième différence de température ;

pour déterminer la puissance de refroidissement $\dot{Q}_t^{cool}$ et/ou la puissance de chauffage $\dot{Q}_t^{heat}$ pour l'au moins un premier espace (4a à 4d) ;
**caractérisé en ce que**
le système d'équations implique également

- une demande en refroidissement $\dot{Q}_t^{demand\ for\ cooling}$ et/ou une demande en chauffage

$$\dot{Q}_t^{demand\ for\ heat}$$

de l'au moins un premier espace (4a à 4d) du site ;

- une demande en refroidissement $\dot{Q}_t^{demand\ for\ cooling}$ et/ou une demande en chauffage

$$\dot{Q}_t^{demand\ for\ heat}$$

de l'au moins un deuxième espace (4a à 4d) du site ;

et **en ce que**
l'au moins un échangeur d'énergie thermique (6a à 6g) possède une caractéristique de rejet thermique prédéterminée ;
et **en ce que** le système d'équations implique également la caractéristique de rejet thermique prédéterminée de l'au moins un échangeur d'énergie thermique (6a à 6d), la caractéristique de rejet prédéterminée étant une relation mathématique indicative d'un rejet thermique en fonction du temps ou une formule indicative d'un rejet thermique en fonction du temps ;
et **en ce que** le procédé comprend l'étape de :
la charge de l'au moins un échangeur d'énergie thermique (6a à 6g) avec de l'énergie thermique en fonction de la puissance de refroidissement $\dot{Q}_t^{cool}$ déterminée pour l'au moins un premier espace (4a à 4d) et/ou en fonction de la puissance de chauffage $\dot{Q}_t^{heat}$ déterminée pour l'au moins un premier espace (4a à 4d).

2. Le procédé selon l'une quelconque de la revendication 1, dans lequel au moins l'une de la première série chronologique de signaux et de la deuxième série chronologique de signaux comprend un horodatage pour chaque signal, le procédé comprenant les étapes de :

la détermination d'une différence temporelle entre deux horodatages consécutifs de l'au moins une série chronologique de signaux ; et
l'utilisation du système d'équations du site, le système d'équations impliquant en outre :

- la différence temporelle déterminée.

3. Le procédé selon l'une quelconque des revendications 1 à 2, le procédé comprenant les étapes de :

la comparaison d'au moins une valeur mesurée de la première série chronologique de valeurs mesurées avec une valeur de limite inférieure ;
si l'au moins une valeur mesurée de la première série chronologique de valeurs mesurées est inférieure à la valeur de limite inférieure :

la détermination d'un écart de limite inférieure comme étant une différence entre l'au moins une valeur mesurée de la première série chronologique de valeurs mesurées et la valeur de limite inférieure ; et
la charge de l'au moins un échangeur d'énergie thermique (6a à 6d) avec de l'énergie thermique exclusivement en fonction de l'écart de limite inférieure.

4. Le procédé selon l'une quelconque des revendications 1 à 3, le procédé comprenant les étapes de :

la comparaison d'au moins une valeur mesurée de la première série chronologique de valeurs mesurées avec une valeur de limite supérieure ;
si l'au moins une valeur mesurée de la première série chronologique de valeurs mesurées est supérieure à la valeur de limite supérieure :

la détermination d'un écart de limite supérieure comme étant une différence entre l'au moins une valeur mesurée de la première série chronologique de valeurs mesurées et la valeur de limite supérieure ; et
la charge de l'au moins un échangeur d'énergie thermique (6a à 6d) avec de l'énergie thermique exclusivement en fonction de l'écart de limite supérieure.

5. Le procédé selon l'une quelconque des revendications 1 à 4, le procédé comprenant les étapes de :

l'acquisition d'une pluralité de séries chronologiques de signaux indicatifs du paramètre de confort, chaque série chronologique étant associée au paramètre de confort dans un espace (4a à 4d) de la pluralité d'espaces (4a à 4d) du site ;

la production d'une pluralité de séries chronologiques de valeurs mesurées à partir de la pluralité de séries chronologiques de signaux ;

l'utilisation de la pluralité de séries chronologiques de valeurs mesurées pour déterminer une différence de température de chaque espace (4a à 4d) ;

l'utilisation du système d'équations du site, le système d'équations impliquant :

- une valeur d'une capacité thermique C de chaque espace (4a à 4d) du site ;

- une demande en refroidissement $\dot{Q}_t^{demand\ for\ cooling}$ et/ou une demande en chauffage $\dot{Q}_t^{demand\ for\ heat}$ de chaque espace du site;

- une puissance de refroidissement $\dot{Q}_t^{cool}$ et/ou une puissance de chauffage $\dot{Q}_t^{heat}$ pour chaque espace (4a à 4d) du site ;

- une différence de température de chaque espace (4a à 4d) du site ; et

- la caractéristique de rejet thermique prédéterminée de l'au moins un échangeur d'énergie thermique (6a à 6d).

6. Le procédé selon la revendication 5, dans lequel au moins une série chronologique de la pluralité de séries chronologiques comprend un horodatage pour chaque signal, le procédé comprenant les étapes de :

la détermination d'une différence temporelle entre deux horodatages consécutifs de l'au moins une série chronologique de signaux ; et

l'utilisation du système d'équations du site, le système d'équations impliquant en outre :

- la différence temporelle déterminée.

7. Le procédé selon l'une quelconque des revendications 1 à 6, le procédé comprenant les étapes de :

la formation d'au moins un premier regroupement comprenant l'au moins un premier espace (4a à 4d) et l'au moins un deuxième espace (4a à 4d) ;

la formation d'au moins un second regroupement comprenant au moins un troisième espace (4a à 4d) de la pluralité d'espaces (4a à 4d) et au moins un quatrième espace (4a à 4d) de la pluralité d'espaces (4a à 4d) ;

l'acquisition d'une troisième série chronologique de signaux indicatifs du paramètre de confort dans l'au moins un premier regroupement ;

l'acquisition d'une quatrième série chronologique de signaux indicatifs du paramètre de confort dans l'au moins un second regroupement ;

la production d'une troisième série chronologique de valeurs mesurées indicatives du paramètre de confort à partir de la troisième série chronologique de signaux ;

la production d'une quatrième série chronologique de valeurs mesurées indicatives du paramètre de confort à partir de la quatrième série chronologique de signaux ;

la détermination d'une troisième différence de température de l'au moins un premier regroupement à partir de la troisième série chronologique de valeurs mesurées et la détermination d'une quatrième différence de température de l'au moins un second regroupement à partir de la quatrième série chronologique de valeurs mesurées ;

l'utilisation du système d'équations du site, le système d'équations impliquant :

- une valeur d'une capacité thermique $C_c$ de l'au moins un premier regroupement ;

- une valeur d'une capacité thermique $C_c$ de l'au moins un second regroupement ;

- une demande en refroidissement $\dot{Q}_{C,t}^{demand\ for\ cooling}$ et/ou une demande en chauffage $\dot{Q}_{C,t}^{demand\ for\ heat}$ de l' au moins un premier regroupement ;

- une demande en refroidissement $\dot{Q}_{C,t}^{demand\ for\ cooling}$ et/ou une demande en chauffage $\dot{Q}_{C,t}^{demand\ for\ heat}$ de l' au moins un second regroupement ;

- une puissance de refroidissement $\dot{Q}_{C,t}^{cool}$ et/ou une puissance de chauffage $\dot{Q}_{C,t}^{heat}$ pour l'au moins un premier regroupement ;

- une puissance de refroidissement $\dot{Q}_{C,t}^{cool}$ et/ou une puissance de chauffage $\dot{Q}_{C,t}^{heat}$ pour l'au moins un second regroupement ;
- la troisième différence de température et la quatrième différence de température ;
- la caractéristique de rejet thermique prédéterminée de l'au moins un échangeur d'énergie thermique (6a à 6d) ;

pour déterminer la puissance de refroidissement $\dot{Q}_{C,t}^{cool}$ et/ou la puissance de chauffage $\dot{Q}_{C,t}^{heat}$ pour l'au moins un premier regroupement ; et
la charge de l'au moins un échangeur d'énergie thermique (6a à 6g) avec de l'énergie thermique en fonction de la puissance de refroidissement $\dot{Q}_{C,t}^{cool}$ déterminée pour l'au moins un premier regroupement et/ou en fonction de la puissance de chauffage $\dot{Q}_{C,t}^{heat}$ déterminée pour l'au moins un second regroupement.

**8.** Le procédé selon la revendication 7, le procédé comprenant les étapes de :

la détermination de la valeur de la capacité thermique $C_c$ de l'au moins un premier regroupement par l'addition de la valeur de la capacité thermique C de l'au moins un premier espace (4a à 4d) et de la valeur de la capacité thermique C de l'au moins un deuxième espace (4a à 4d) ; et
la détermination de la valeur de la capacité thermique $C_c$ de l'au moins un second regroupement par l'addition d'une valeur d'une capacité thermique C de l'au moins un troisième espace (4a à 4d) et d'une valeur d'une capacité thermique C de l'au moins un quatrième espace (4a à 4d).

**9.** Le procédé selon l'une quelconque des revendications 7 à 8, le procédé comprenant les étapes de :

la détermination de la demande en refroidissement $\dot{Q}_{C,t}^{demand\ for\ cooling}$ de l'au moins un premier regroupement par l'addition de la demande en refroidissement $\dot{Q}_{t}^{demand\ for\ cooling}$ de l'au moins un premier espace (4a à d) et de la demande en refroidissement $\dot{Q}_{t}^{demand\ for\ cooling}$ de l'au moins un deuxième espace (4a à d) ; et

la détermination de la demande en refroidissement $\dot{Q}_{C,t}^{demand\ for\ cooling}$ de l'au moins un second regroupement par l' addition d' une demande en refroidissement $\dot{Q}_{t}^{demand\ for\ cooling}$ de l'au moins un troisième espace (4a à d) et d'une demande en refroidissement $\dot{Q}_{t}^{demand\ for\ cooling}$ de l'au moins un quatrième espace (4a à d) .

**10.** Le procédé selon l'une quelconque des revendications 7 à 8, le procédé comprenant les étapes de :

la détermination de la demande en chauffage $\dot{Q}_{C,t}^{demand\ for\ heat}$ de l'au moins un premier regroupement par l'addition de la demande en chauffage $\dot{Q}_{t}^{demand\ for\ heat}$ de l'au moins un premier espace (4a à d) et de la demande en chauffage $\dot{Q}_t^{demand\ for\ heat}$ de l'au moins un deuxième espace (4a à d) ; et

la détermination de la demande en chauffage $\dot{Q}_{C,t}^{demand\ for\ heat}$ de l'au moins un second regroupement par l'addition d'une demande en chauffage $\dot{Q}_t^{demand\ for\ heat}$ de l'au moins un troisième espace (4a à d) et d'une demande en chauffage $\dot{Q}_t^{demand\ for\ heat}$ de l'au moins un quatrième espace (4a à d).

11. Le procédé selon l'une quelconque des revendications 7 à 10, le procédé comprenant les étapes de :

la comparaison d'au moins une valeur mesurée de la troisième série chronologique de valeurs mesurées avec une valeur de limite inférieure ;
si l'au moins une valeur mesurée de la troisième série chronologique de valeurs mesurées est inférieure à la valeur de limite inférieure :

la détermination d'un écart de limite inférieure comme étant une différence entre l'au moins une valeur mesurée de la troisième série chronologique de valeurs mesurées et la valeur de limite inférieure ; et
la charge de l'au moins un échangeur d'énergie thermique (6a à 6d) avec de l'énergie thermique exclusivement en fonction de l'écart de limite inférieure.

12. Programme d'ordinateur comprenant des instructions qui, lorsque le programme est exécuté par un ordinateur, amènent l'ordinateur à effectuer les étapes de l'un quelconque des procédés des revendications 1 à 11.

13. Support lisible par ordinateur comprenant des instructions qui, lors de leur exécution par un ordinateur, amènent l'ordinateur à effectuer les étapes de l'un quelconque des procédés des revendications 1 à 11.

14. Vecteur de données lisible par ordinateur ayant, stocké sur celui-ci, le programme d'ordinateur de la revendication 12.

FIG 1

FIG 2

FIG 3

| 7 | ← → | 8b |

FIG 4

FIG 5

**REFERENCES CITED IN THE DESCRIPTION**

**Patent documents cited in the description**

- EP 2993640 A1, SIEMENS AG
- EP 3748458 A1
- US 2021034024 A1
- EP 1564616 A3
- WO 2019129800 A1
- EP 3489591 A1
- EP 3584555 B1